# EUROPEAN PATENT APPLICATION

(11) **EP 4 631 827 A2**
(43) Date of publication of application: **15.10.2025**
(21) Application number: 25168275.3
(22) Date of filing: 25.12.2020
(51) Int. Cl.: B62D 1/00

(54) **VEHICLE CALLING METHOD, INTELLIGENT VEHICLE, AND DEVICE**

(62) Divisional of application: 20966632.0
(71) Applicant: Shenzhen Yinwang Intelligent Technologies Co., Ltd., Shenzhen, Guangdong 518129 (CN)
(72) Inventor: WU, Hao, Shenzhen, 518129 (CN); TANG, Qiuyuan, Shenzhen, 518129 (CN); PENG, Shuaihua, Shenzhen, 518129 (CN)
(74) Representative: Pfenning, Meinig & Partner mbB

(57) **Abstract**

A vehicle summoning method may be applied to an intelligent vehicle and an intelligent networked vehicle, and includes: obtaining (401), when a vehicle is in a parking state, identifier information of a person in a first range around the vehicle; when the identifier information of the person in the first range meets a preset condition, determining (402), as a target person, the person who meets the preset condition; obtaining (403) a body movement of the target person; and when a first distance is less than a first threshold, controlling (404), based on the body movement, the vehicle to travel to a first location, where the first location is obtained based on the vehicle and information about an ambient environment of the vehicle, and the first distance is used to indicate a distance between the target person and the vehicle. According to the vehicle summoning method, a user can summon a vehicle by using a body movement, to improve user experience of the vehicle, and avoid a problem that a vehicle door collides with a surrounding wall/vehicle if the door is forcibly opened in narrow space, thereby avoiding a problem such as property damage.

## Description

### TECHNICAL FIELD

This application relates to the self-driving field, and in particular, to a vehicle summoning method, an intelligent vehicle, and a device.

### BACKGROUND

In daily life, after driving to a destination, a user needs to park a vehicle in a parking lot near the destination, and after completing processing affairs of the user, the user returns to the parking lot and drives away.

Currently, if a parking place in which the vehicle is located is very narrow, and another vehicle is parked in a neighboring parking place of the vehicle, when the user expects to enter the vehicle, due to the narrow space, a vehicle door easily collides with another surrounding vehicle if the door is forcibly opened. Consequently, a problem such as property damage is brought, and user experience of the vehicle is affected.

### SUMMARY

Embodiments of this application provide a vehicle summoning method, an intelligent vehicle, and a device, so that a user can summon a vehicle by using a body movement, to improve user experience of the vehicle, and avoid a problem that a vehicle door collides with a surrounding wall/vehicle if the door is forcibly opened in narrow space, thereby avoiding a problem such as property damage.

To achieve the foregoing objective, embodiments of this application provide the following technical solutions.

A first aspect of this application provides a vehicle summoning method, including: When a vehicle is in a parking state, identifier information of a person in a first range around the vehicle is obtained. The first range may be understood as a preset range, and the first range may alternatively be understood as a range in which a sensor system of the vehicle can perform sensing. For example, the sensing range may be a range in which a camera in the sensor system can perform detection. The first range around the vehicle is set, so that when a driver/passenger is in a specific range around the vehicle, the vehicle can sense the driver/passenger in a timely manner. The identifier information of the person includes but is not limited to facial information of the person, figure information of the person, and fingerprint information of the person. There may be one or more types of identifier information of the person. For example, the identifier information may include facial information, figure information, and fingerprint information, or the identifier information of the person may include only facial information. When the identifier information of the person in the first range meets a preset condition, the person who meets the preset condition is determined as a target person. A body movement of the target person is obtained. When a first distance is less than a first threshold, the vehicle is controlled, based on the body movement, to travel to a first location, where the first location is obtained based on the vehicle and information about an ambient environment of the vehicle, and the first distance is used to indicate a distance between the target person and the vehicle. The information about the ambient environment of the vehicle may be understood as a relative location relationship between the vehicle and an obstacle around the vehicle, for example, a relative location relationship between the vehicle and another vehicle around the vehicle, or may be understood as an environment in which the vehicle is located, for example, the vehicle is parked in a first parking place. The vehicle may control, based on the body movement and the first distance, the vehicle to travel out of specific space, for example, control the vehicle to travel out of a parking area. The parking area may be a parking place, a private garage, or any area in which the vehicle stops. The vehicle may control, based on the first distance, a distance by which the vehicle travels after the vehicle travels out of a current location. For example, when the distance between the target person and the vehicle is short, that is, the first distance is less than the first threshold, the vehicle may be controlled to travel out by a half vehicle body and then stop. For another example, when the distance between the target person and the vehicle is long, for example, the first distance is not less than the first threshold, the vehicle may be controlled to travel near the target person. It can be learned from the first aspect that, the vehicle may control, based on the body movement of the target person, the vehicle to travel out of specific space, and control, based on the distance between the target person and the vehicle, a location at which the vehicle stops after traveling out of the specific space. Based on the solution provided in this application, the vehicle may flexibly control, based on the body movement of the target person and the distance between the target person and the vehicle, the vehicle to travel from specific space to a specific location, thereby improving user experience of the vehicle.

Optionally, with reference to the first aspect, in a first possible implementation, the controlling, based on the body movement, the vehicle to travel to a first location includes: obtaining a first direction based on the body movement; and controlling the vehicle to travel in the first direction to the first location.

It can be learned from the first possible implementation of the first aspect that the vehicle may control, based on different body movements of the target person, the vehicle to travel in different directions.

Optionally, with reference to the first possible implementation of the first aspect, in a second possible implementation, controlling, based on the body movement, the vehicle to travel in the first direction includes: controlling, based on the body movement, the vehicle to travel straight forward from a current location, turn left to travel, turn right to travel, or reverse. In the second possible manner of the first aspect, several specific manners of controlling a traveling direction of the vehicle based on the body movement are provided, thereby increasing diversity of the solution.

Optionally, with reference to the first possible implementation of the first aspect or the second possible implementation of the first aspect, in a third possible implementation, the first location is obtained based on a location of the vehicle relative to a first parking place. For example, the vehicle is controlled to travel straight forward from the current location until the vehicle travels out of the first parking place and then stop traveling. That the vehicle travels out of the first parking place may be understood as that the rear part of the vehicle travels out of the first parking place, or at least a half vehicle body of the vehicle travels out of the first parking place, or a preset location of a vehicle body travels out of the first parking place. Alternatively, the first location may be obtained based on the relative location between the vehicle and a neighboring vehicle of the vehicle. For example, the vehicle is controlled to travel straight forward until the vehicle exceeds the neighboring vehicle by a half vehicle body and then stop traveling. For another example, the vehicle is controlled to travel straight forward until the vehicle exceeds the neighboring vehicle by an entire vehicle body and then stop traveling. For another example, the vehicle is controlled to travel straight forward until a preset location of a vehicle body exceeds the front of the neighboring vehicle. It can be learned from the third possible implementation of the first aspect that several specific manners of controlling, based on the distance between the target person and the vehicle, the vehicle to travel are provided, thereby increasing diversity of the solution.

Optionally, with reference to the third possible implementation of the first aspect, in a fourth possible implementation, the first location is a location at which the vehicle stops after a partial vehicle body of the vehicle travels out of the first parking place, and the partial vehicle body includes at least one vehicle door of the vehicle. It can be learned from the fourth possible implementation of the first aspect that a specific manner of controlling, based on the distance between the target person and the vehicle, the vehicle to travel is provided, thereby increasing diversity of the solution.

Optionally, with reference to the second possible implementation of the first aspect, in a fifth possible implementation, when the first distance is not less than the first threshold, the vehicle is controlled, based on the body movement, to travel to a second location, where the second location is obtained based on a preset point, and the preset point is a coordinate point in a preset range around the target person. It can be learned from the fifth possible implementation of the first aspect that a specific manner of controlling, based on the distance between the target person and the vehicle, the vehicle to travel is provided. When the distance between the target person and the vehicle is long, the vehicle is controlled to travel to a side of the target person, thereby increasing diversity of the solution.

Optionally, with reference to the first aspect or the first possible implementation of the first aspect to the fifth possible implementation of the first aspect, in a sixth possible implementation, the method further includes: when the vehicle is in a parking state, detecting whether there is a person inside the vehicle. The obtaining, when a vehicle is in a parking state, identifier information of a person in a first range around the vehicle includes: when the vehicle is in a parking state and there is no person inside the vehicle, obtaining the identifier information of the person in the first range around the vehicle. It can be learned from the sixth possible manner of the first aspect that in some scenarios, although the vehicle is in a parking state, there may be a person inside the vehicle. In this case, if the vehicle controls, in response to the body movement of the target person, the vehicle to travel, the person inside the vehicle may be frightened, and user experience of the vehicle is affected. Therefore, in a possible implementation, when the vehicle is in a parking state, the vehicle may further detect whether there is a person inside the vehicle. If the vehicle is in a parking state and there is no person inside the vehicle, the identifier information of the person in the first range around the vehicle is obtained.

Optionally, with reference to the first aspect or the first possible implementation of the first aspect to the sixth possible implementation of the first aspect, in a seventh possible implementation, the first distance is determined based on a distance between a terminal and the vehicle, and the terminal is a terminal that establishes a binding relationship with the vehicle in advance.

Optionally, with reference to the first aspect or the first possible implementation of the first aspect to the seventh possible implementation of the first aspect, in an eighth possible implementation, the method further includes: when the vehicle is in a parking state, learning whether the terminal exists in the first range of the vehicle, where the terminal is a terminal that establishes a binding relationship with the vehicle in advance; and the obtaining, when a vehicle is in a parking state, identifier information of a person in a first range around the vehicle includes: when the vehicle is in a parking state and the terminal exists in the first range of the vehicle, obtaining the identifier information of the person in the first range around the vehicle.

Optionally, with reference to the first aspect or the first possible implementation of the first aspect to the eighth possible implementation of the first aspect, in a ninth possible implementation, the method further includes: obtaining a start instruction when the vehicle is in a parking state; and the obtaining a body movement of the target person includes: when learning that the start instruction matches a start instruction prestored in the vehicle, obtaining the body movement of the target person. It can be learned from the ninth possible implementation of the first aspect that, to enable the vehicle to accurately respond to a body instruction of an instruction sender and perform a corresponding action, a start operation for the body instruction may be further set. After the start operation is correctly performed, the vehicle controls, in response to the body instruction of the instruction sender, the vehicle to move out of specific space. When the start operation is not correctly performed, the vehicle does not respond to the body instruction of the instruction sender.

Optionally, with reference to the first aspect or the first possible implementation of the first aspect to the tenth possible implementation of the first aspect, in a tenth possible implementation, the body movement includes one or more of a come-over movement, continuously knocking a hood of the vehicle, touching the hood of the vehicle and drawing a pattern, and a traffic police gesture.

A second aspect of this application provides a vehicle, including: a sensor, configured to obtain, when the vehicle is in a parking state, identifier information of a person in a first range around the vehicle; a processor, configured to: when the identifier information of the person in the first range meets a preset condition, determine, as a target person, the person who meets the preset condition, where the sensor is further configured to obtain a body movement of the target person; and a controller, configured to: when a first distance is less than a first threshold, control, based on the body movement, the vehicle to travel to a first location, where the first location is obtained based on the vehicle and information about an ambient environment of the vehicle, and the first distance is used to indicate a distance between the target person and the vehicle.

Optionally, with reference to the second aspect, in a first possible implementation, the controller is configured to: obtain a first direction based on the body movement; and control the vehicle to travel in the first direction to the first location.

Optionally, with reference to the first possible implementation of the second aspect, in a second possible implementation, the controller is configured to control, based on the body movement, the vehicle to travel straight forward from a current location, turn left to travel, turn right to travel, or reverse.

Optionally, with reference to the first possible implementation of the second aspect or the second possible implementation of the second aspect, in a third possible implementation, the first location is obtained based on a relative location between the vehicle and a neighboring vehicle of the vehicle. Alternatively, the first location may be a location at which the vehicle stops after traveling out of a first parking place.

Optionally, with reference to the third possible implementation of the second aspect, in a fourth possible implementation, the first location is a location at which the vehicle stops after a partial vehicle body of the vehicle travels out of the first parking place, and the partial vehicle body includes at least one vehicle door of the vehicle. The controller is further configured to: when the first distance is not less than the first threshold, control, based on the body movement, the vehicle to travel to a second location, where the second location is obtained based on a preset point, and the preset point is a coordinate point in a preset range around the target person.

Optionally, with reference to the second aspect or the first possible implementation of the second aspect to the fifth possible implementation of the second aspect, in a fifth possible implementation, the sensor is further configured to: when the vehicle is in a parking state, detect whether there is a person inside the vehicle; and the sensor is configured to: when the vehicle is in a parking state and there is no person inside the vehicle, obtain the identifier information of the person in the first range around the vehicle.

Optionally, with reference to the second aspect or the first possible implementation of the second aspect to the sixth possible implementation of the second aspect, in a sixth possible implementation, the first distance is determined based on a distance between a terminal and the vehicle, and the terminal is a terminal that establishes a binding relationship with the vehicle in advance.

Optionally, with reference to the second aspect or the first possible implementation of the second aspect to the seventh possible implementation of the second aspect, in a seventh possible implementation, the vehicle further includes: when the vehicle is in a parking state, learning whether the terminal exists in the first range of the vehicle, where the terminal is a terminal that establishes a binding relationship with the vehicle in advance; and the obtaining, when a vehicle is in a parking state, identifier information of a person in a first range around the vehicle includes: when the vehicle is in a parking state and the terminal exists in the first range of the vehicle, obtaining the identifier information of the person in the first range around the vehicle.

Optionally, with reference to the second aspect or the first possible implementation of the second aspect to the eighth possible implementation of the second aspect, in an eighth possible implementation, the sensor is further configured to obtain a start instruction when the vehicle is in a parking state; and the sensor is configured to: when learning that the start instruction matches a start instruction prestored in the vehicle, obtain the body movement of the target person.

Optionally, with reference to the second aspect or the first possible implementation of the second aspect to the tenth possible implementation of the second aspect, in a ninth possible implementation, the body movement includes one or more of a come-over movement, continuously knocking a hood of the vehicle, touching the hood of the vehicle and drawing a pattern, and a traffic police gesture.

A third aspect of this application provides a vehicle, including a sensing module, configured to obtain, when the vehicle is in a parking state, identifier information of a person in a first range around the vehicle; a processing module, configured to: when the identifier information of the person in the first range meets a preset condition, determine, as a target person, the person who meets the preset condition, where the sensing module is further configured to obtain a body movement of the target person; and a control module, configured to: when a first distance is less than a first threshold, control, based on the body movement, the vehicle to travel to a first location, where the first location is obtained based on the vehicle and information about an ambient environment of the vehicle, and the first distance is used to indicate a distance between the target person and the vehicle.

Optionally, with reference to the third aspect, in a first possible implementation, the control module is configured to: obtain a first direction based on the body movement; and control the vehicle to travel in the first direction to the first location.

Optionally, with reference to the first possible implementation of the third aspect, in a second possible implementation, the control module is configured to control, based on the body movement, the vehicle to travel straight forward from a current location, turn left to travel, turn right to travel, or reverse.

Optionally, with reference to the first possible implementation of the third aspect or the second possible implementation of the third aspect, in a third possible implementation, the first location is obtained based on a relative location between the vehicle and a neighboring vehicle of the vehicle. Alternatively, the first location may be a location at which the vehicle stops after traveling out of a first parking place.

Optionally, with reference to the third possible implementation of the third aspect, in a fourth possible implementation, the first location is a location at which the vehicle stops after a partial vehicle body of the vehicle travels out of the first parking place, and the partial vehicle body includes at least one vehicle door of the vehicle. The control module is further configured to: when the first distance is not less than the first threshold, control, based on the body movement, the vehicle to travel to a second location, where the second location is obtained based on a preset point, and the preset point is a coordinate point in a preset range around the target person.

Optionally, with reference to the second possible implementation of the third aspect, in a fifth possible implementation, the control module is configured to: when the first distance is not less than the first threshold, control the vehicle to travel to a preset range around the target person.

Optionally, with reference to the third aspect or the first possible implementation of the third aspect to the fifth possible implementation of the third aspect, in a sixth possible implementation, the sensing module is further configured to: when the vehicle is in a parking state, detect whether there is a person inside the vehicle; and the sensing module is configured to: when the vehicle is in a parking state and there is no person inside the vehicle, obtain the identifier information of the person in the first range around the vehicle.

Optionally, with reference to the third aspect or the first possible implementation of the third aspect to the sixth possible implementation of the third aspect, in a seventh possible implementation, the first distance is determined based on a distance between a terminal and the vehicle, and the terminal is a terminal that establishes a binding relationship with the vehicle in advance.

Optionally, with reference to the third aspect or the first possible implementation of the third aspect to the seventh possible implementation of the third aspect, in an eighth possible implementation, the vehicle further includes: when the vehicle is in a parking state, learning whether the terminal exists in the first range of the vehicle, where the terminal is a terminal that establishes a binding relationship with the vehicle in advance; and the obtaining, when a vehicle is in a parking state, identifier information of a person in a first range around the vehicle includes: when the vehicle is in a parking state and the terminal exists in the first range of the vehicle, obtaining the identifier information of the person in the first range around the vehicle.

Optionally, with reference to the third aspect or the first possible implementation of the third aspect to the eighth possible implementation of the third aspect, in a ninth possible implementation, the sensing module is further configured to obtain a start instruction when the vehicle is in a parking state; and the sensing module is configured to: when learning that the start instruction matches a start instruction prestored in the vehicle, obtain the body movement of the target person.

Optionally, with reference to the third aspect or the first possible implementation of the third aspect to the tenth possible implementation of the third aspect, in a tenth possible implementation, the body movement includes one or more of a come-over movement, continuously knocking a hood of the vehicle, touching the hood of the vehicle and drawing a pattern, and a traffic police gesture.

A fourth aspect of this application provides an intelligent vehicle, where the intelligent vehicle includes a processor, the processor is coupled to a memory, the memory stores program instructions, and when the program instructions stored in the memory are executed by the processor, the method described in any one of the first aspect or the possible implementations of the first aspect is implemented.

A fifth aspect of this application provides an intelligent vehicle, where the intelligent vehicle includes a processing circuit and a storage circuit, and the processing circuit and the storage circuit are configured to perform the method described in any one of the first aspect or the possible implementations of the first aspect.

A sixth aspect of this application provides a computer-readable storage medium, including a program, where when the program runs on a computer, the computer is enabled to perform the method described in any one of the first aspect or the possible implementations of the first aspect.

A seventh aspect of this application provides a computer program product, where when the computer program product runs on a computer, the computer is enabled to perform the method described in any one of the first aspect or the possible implementations of the first aspect.

An eighth aspect of this application provides a chip, where the chip is coupled to a memory, configured to execute a program stored in the memory, to perform the method described in any one of the first aspect or the possible implementations of the first aspect.

In the solution provided in this application, when the vehicle identifies that the target person exists around the vehicle, the vehicle may control, based on the body movement made by the target person, the vehicle to travel out of specific space. A solution in which the vehicle is summoned by using the body movement is simpler than a solution in which the vehicle needs to be summoned by using a terminal device, thereby improving user experience of a driver/passenger of the vehicle.

### BRIEF DESCRIPTION OF DRAWINGS

FIG. 1 is a schematic diagram of a structure of a vehicle according to an embodiment of this application;
FIG. 2 is a schematic diagram of an application scenario of a vehicle summoning method according to this application;

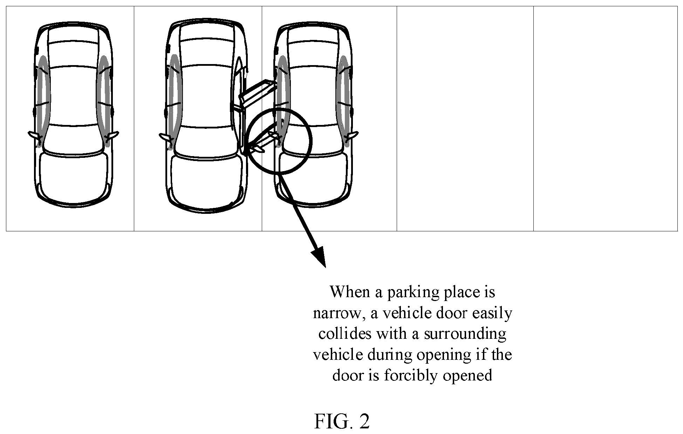

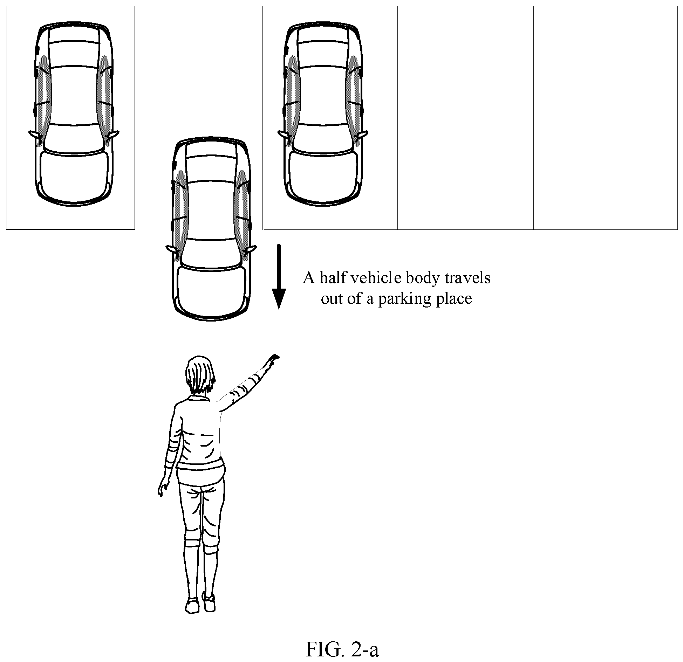

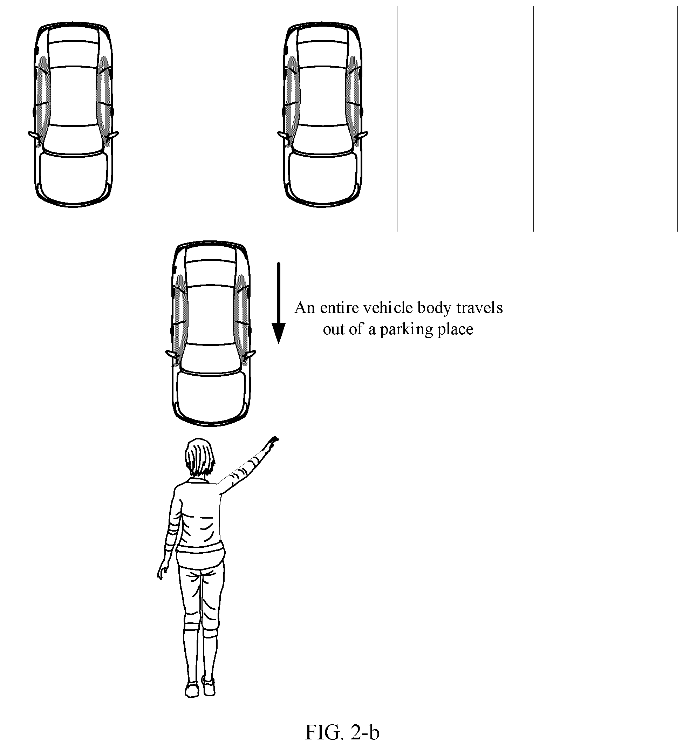

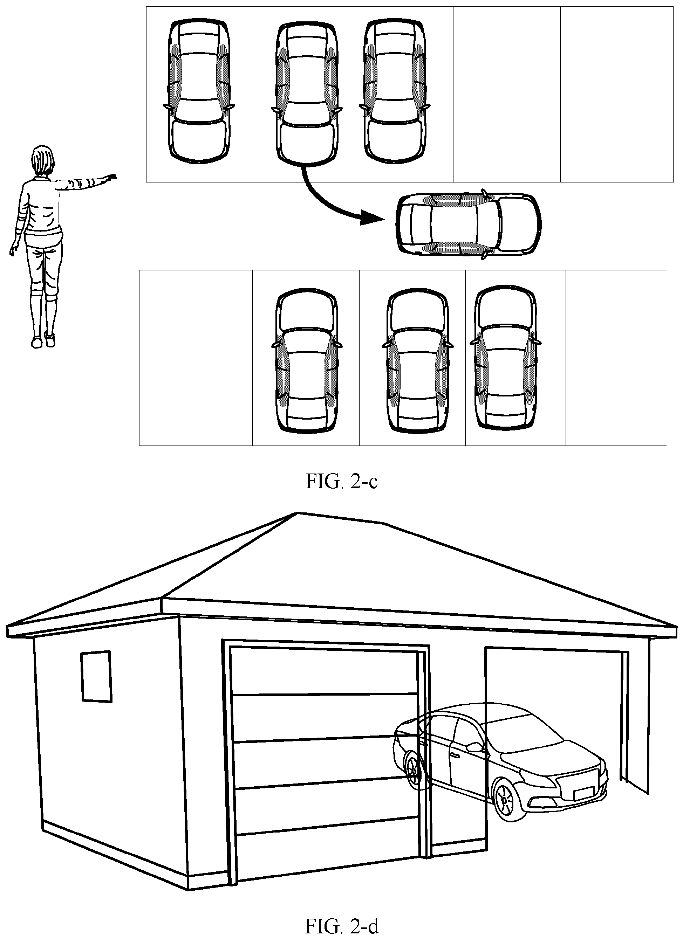

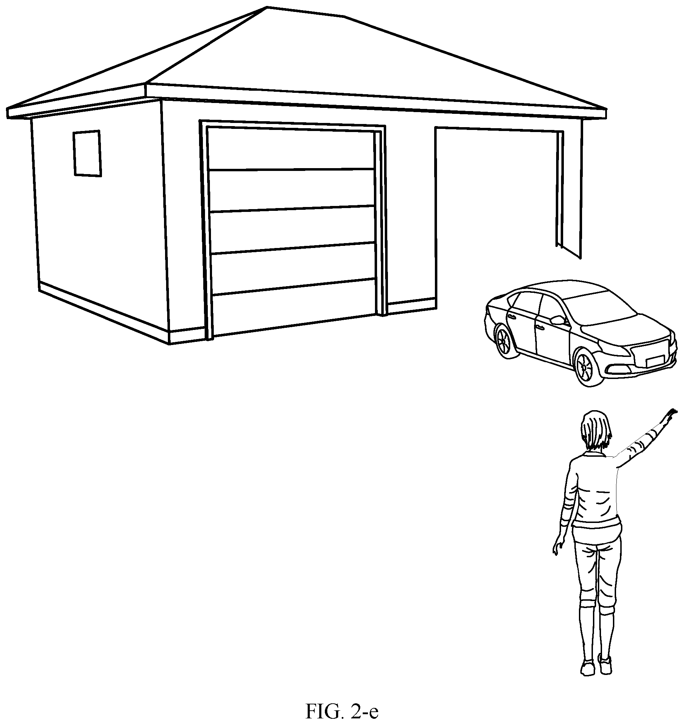

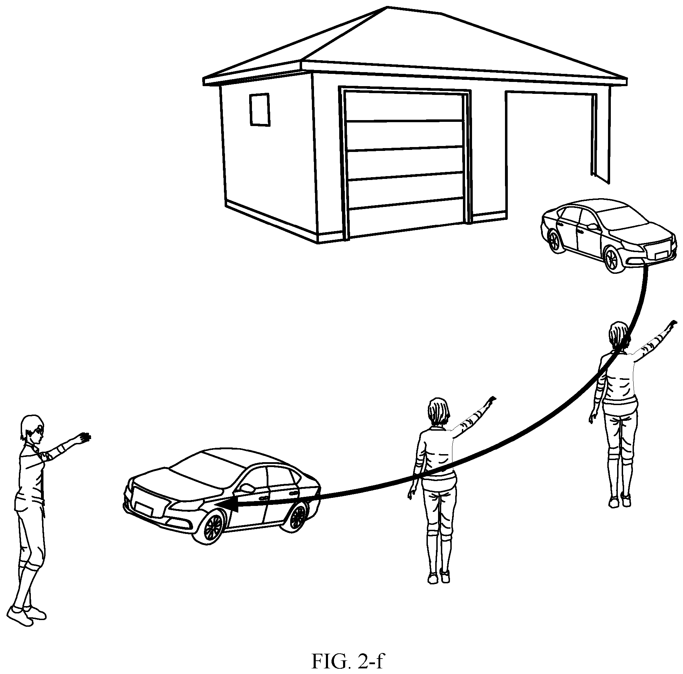

FIG. 2-a is a schematic diagram of another application scenario of a vehicle summoning method according to this application;
FIG. 2-b is a schematic diagram of another application scenario of a vehicle summoning method according to this application;
FIG. 2-c is a schematic diagram of another application scenario of a vehicle summoning method according to this application;
FIG. 2-d is a schematic diagram of another application scenario of a vehicle summoning method according to this application;
FIG. 2-e is a schematic diagram of another application scenario of a vehicle summoning method according to this application;
FIG. 2-f is a schematic diagram of another application scenario of a vehicle summoning method according to this application;

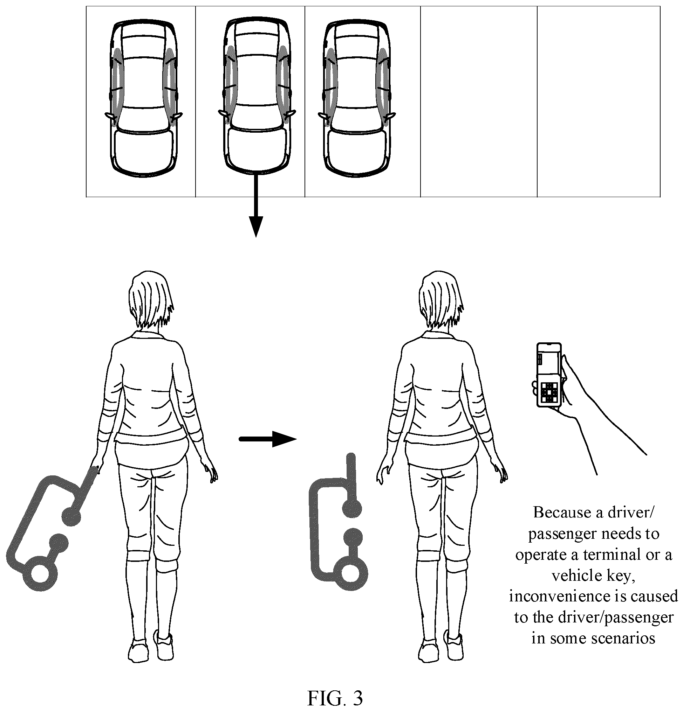

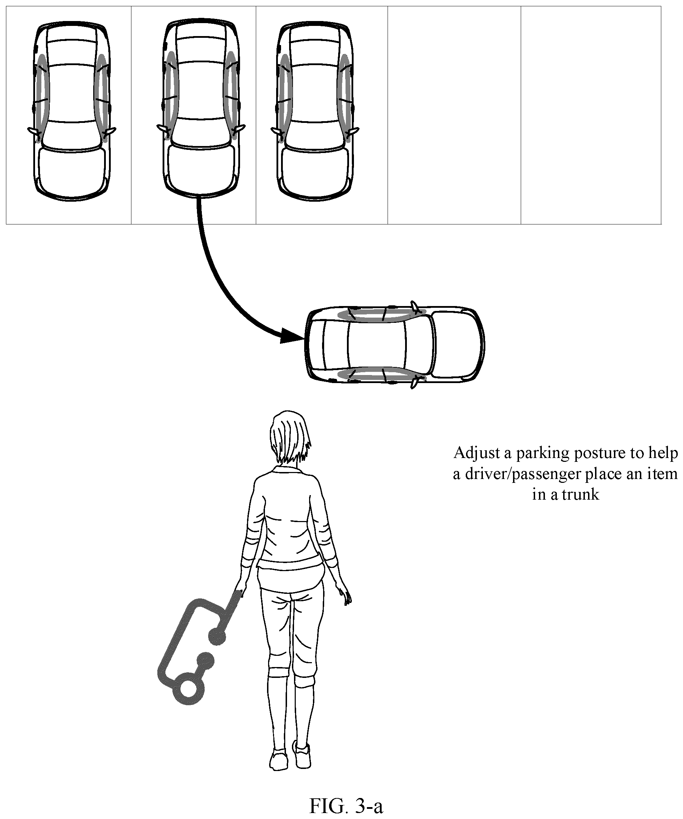

FIG. 3 is a schematic diagram of another application scenario of a vehicle summoning method according to this application;
FIG. 3-a is a schematic diagram of another application scenario of a vehicle summoning method according to this application;

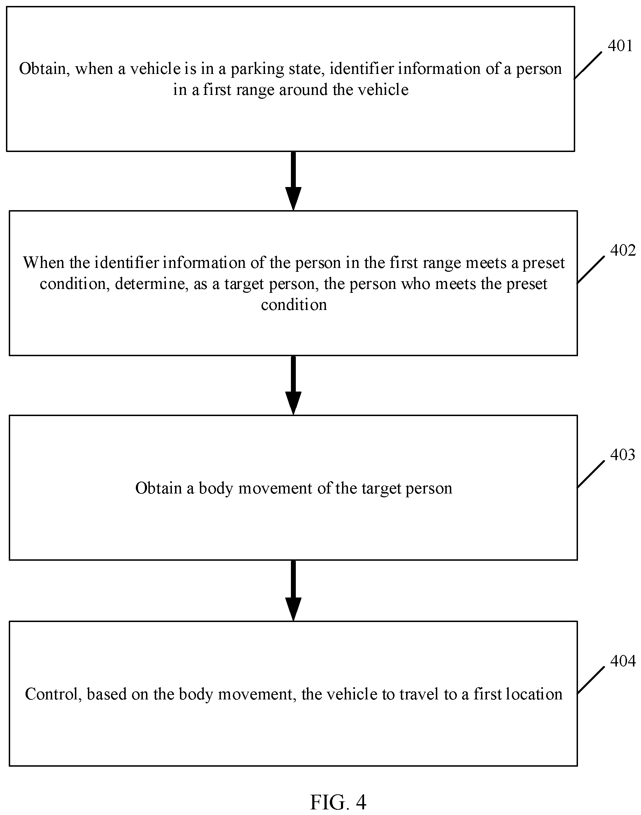

FIG. 4 is a schematic flowchart of a vehicle summoning method according to an embodiment of this application;

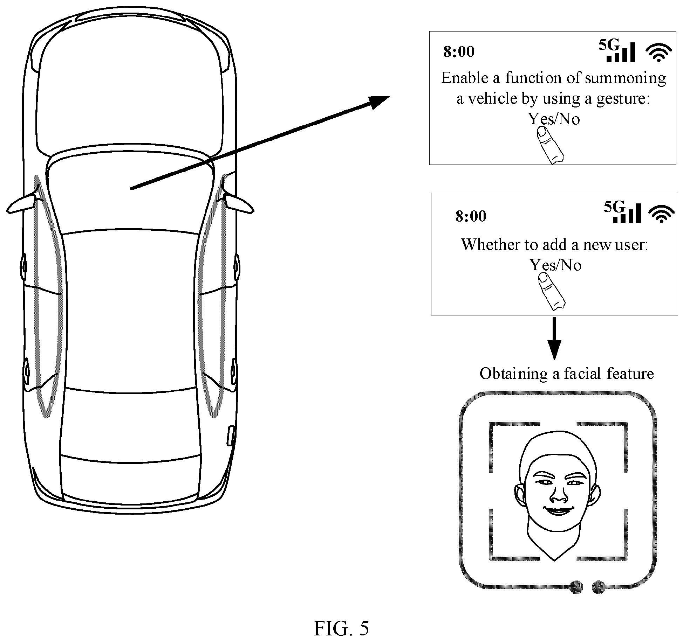

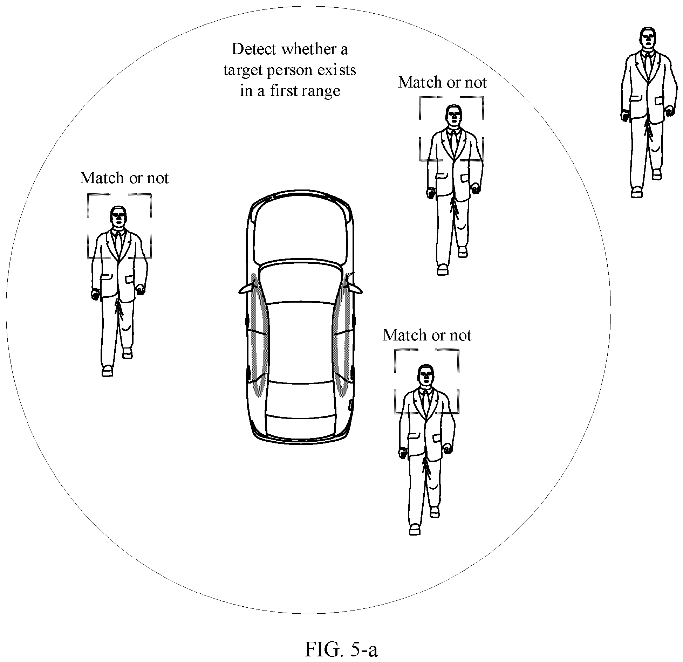

FIG. 5 is a schematic diagram of another application scenario of a vehicle summoning method according to this application;
FIG. 5-a is a schematic diagram of another application scenario of a vehicle summoning method according to this application;

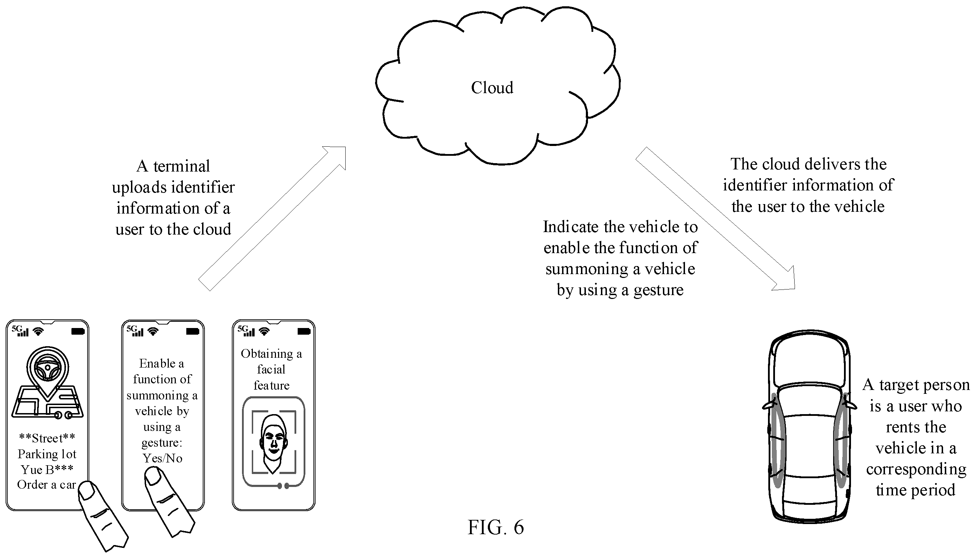

FIG. 6 is a schematic diagram of another application scenario of a vehicle summoning method according to this application;

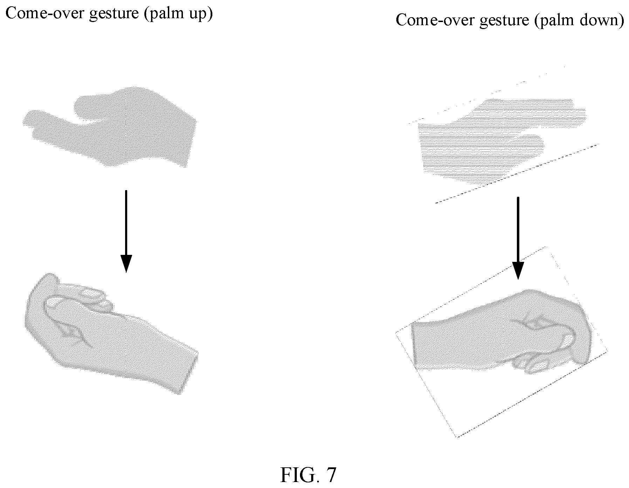

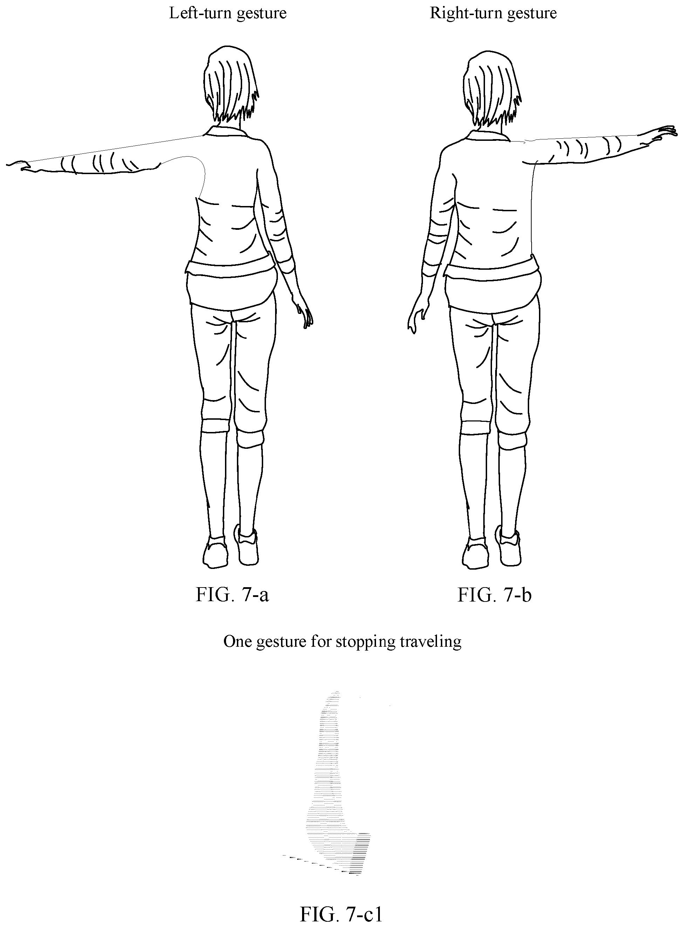

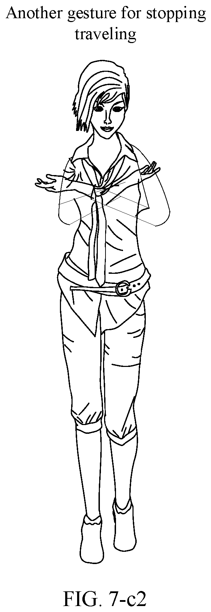

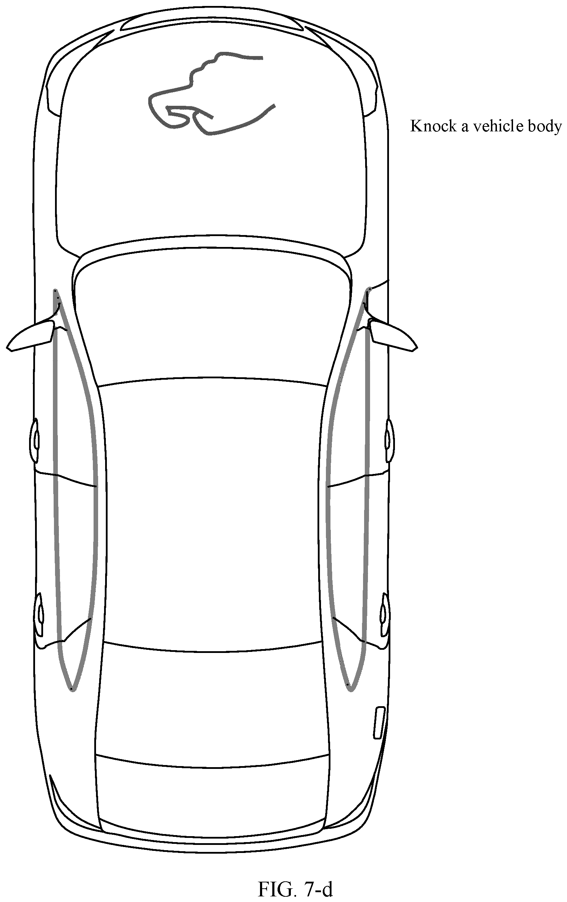

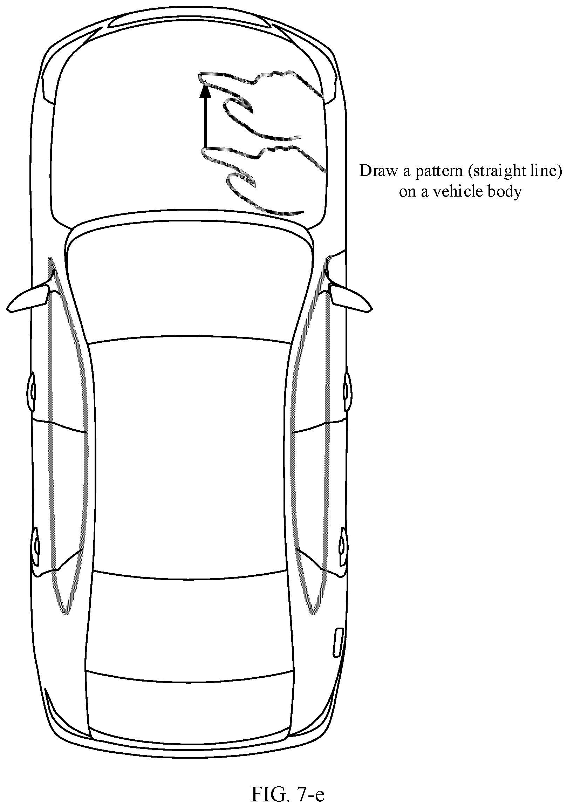

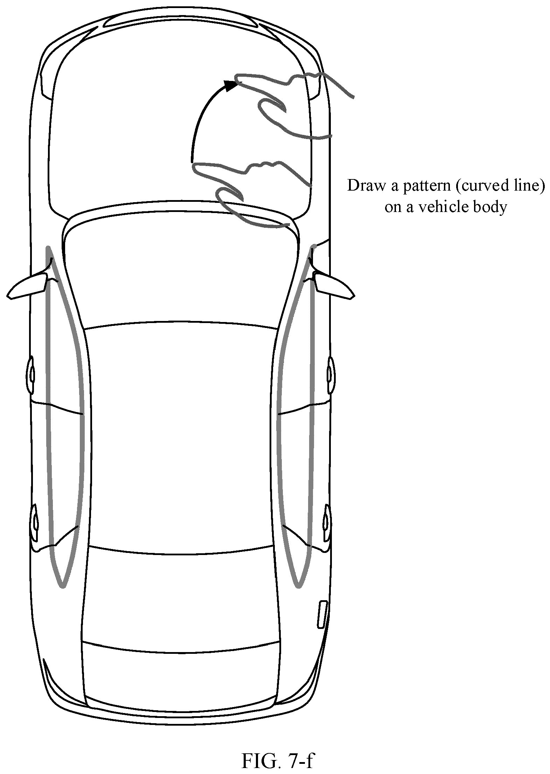

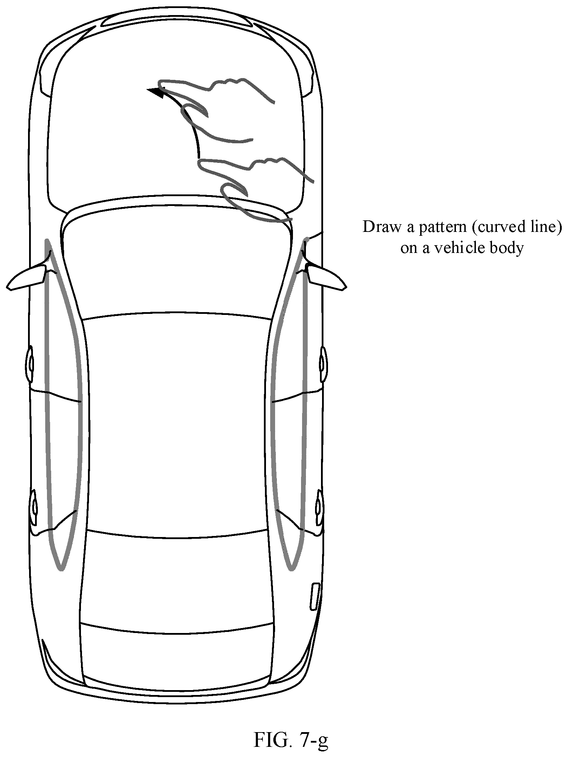

FIG. 7 shows a possible body instruction in a vehicle summoning method according to this application;
FIG. 7-a is a schematic diagram of another application scenario of a vehicle summoning method according to this application;
FIG. 7-b is a schematic diagram of another application scenario of a vehicle summoning method according to this application;
FIG. 7-c1 is a schematic diagram of another application scenario of a vehicle summoning method according to this application;
FIG. 7-c2 is a schematic diagram of another application scenario of a vehicle summoning method according to this application;
FIG. 7-d is a schematic diagram of another application scenario of a vehicle summoning method according to this application;
FIG. 7-e is a schematic diagram of another application scenario of a vehicle summoning method according to this application;
FIG. 7-f is a schematic diagram of another application scenario of a vehicle summoning method according to this application;
FIG. 7-g is a schematic diagram of another application scenario of a vehicle summoning method according to this application;

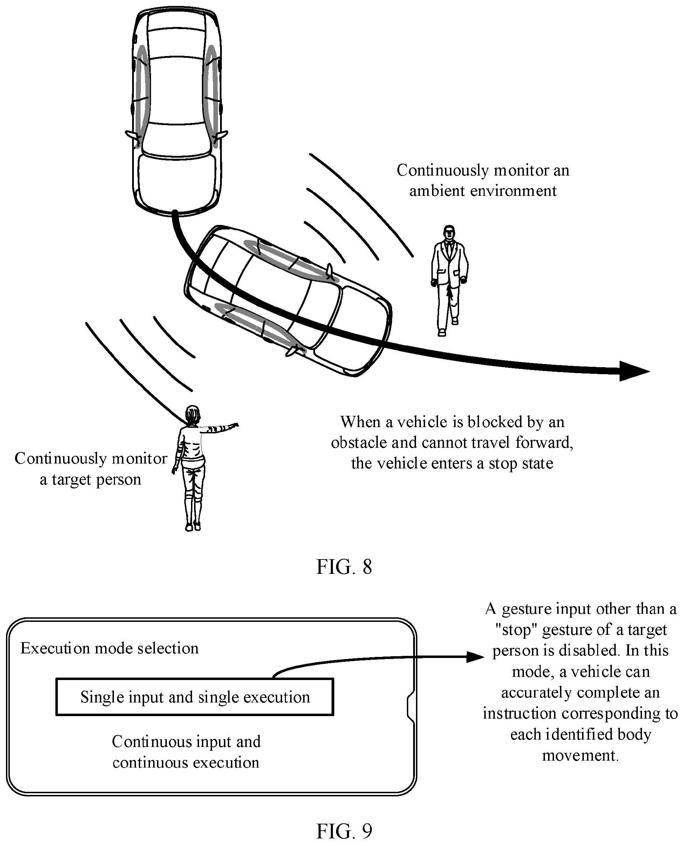

FIG. 8 is a schematic diagram of another application scenario of a vehicle summoning method according to this application;

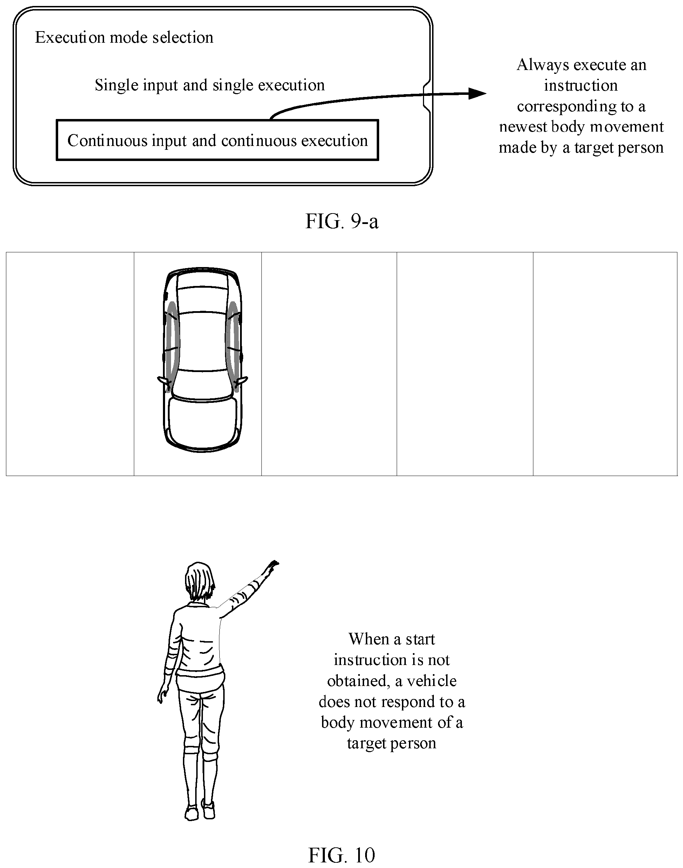

FIG. 9 is a schematic diagram of an execution model of a vehicle summoning method according to this application;
FIG. 9-a is a schematic diagram of another execution model of a vehicle summoning method according to this application;

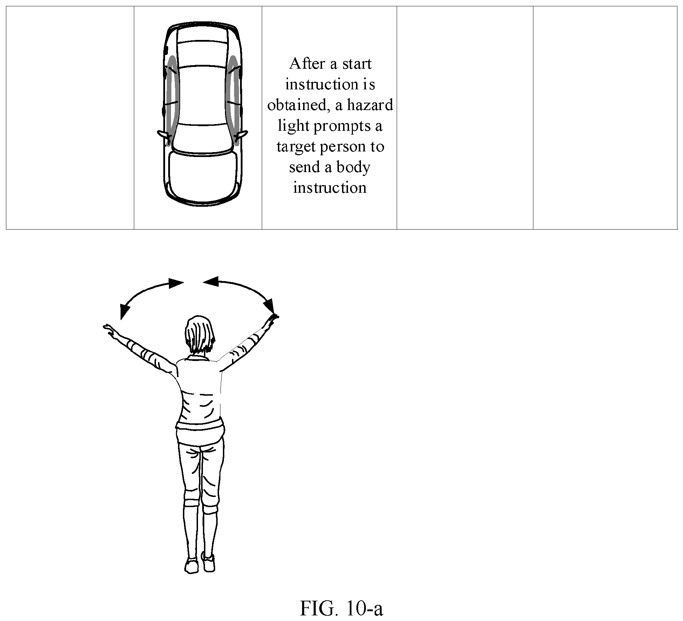

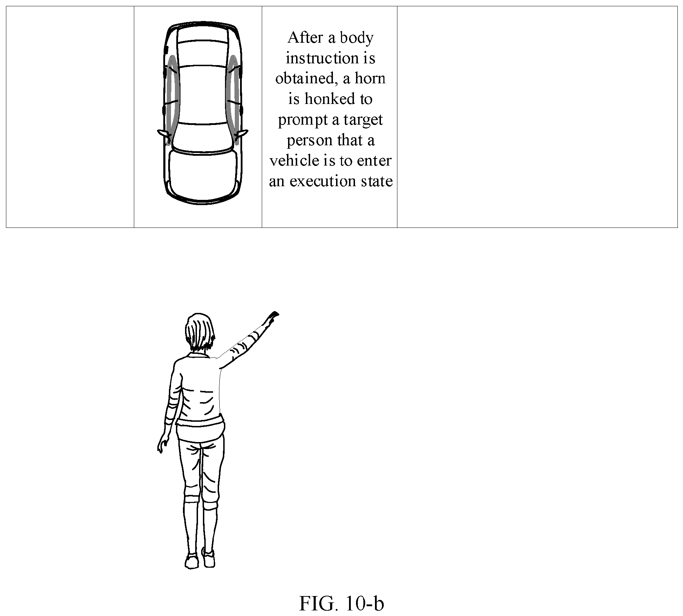

FIG. 10 is a schematic diagram of another application scenario of a vehicle summoning method according to this application;
FIG. 10-a is a schematic diagram of another application scenario of a vehicle summoning method according to this application;
FIG. 10-b is a schematic diagram of another application scenario of a vehicle summoning method according to this application;

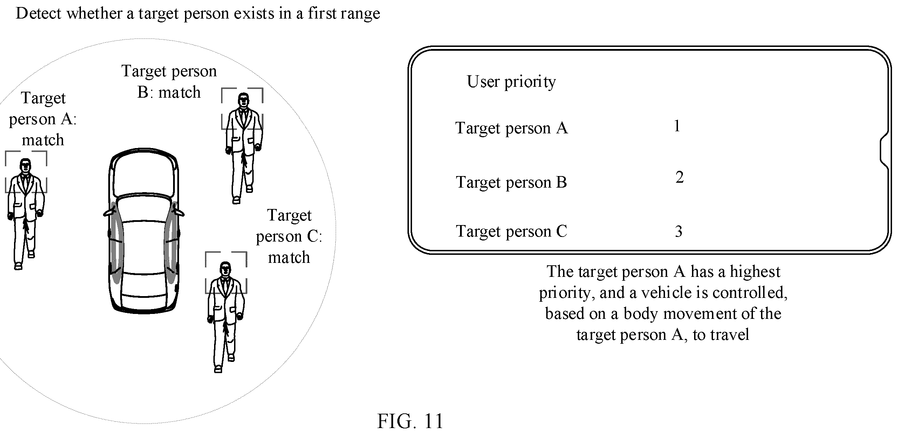

FIG. 11 is a schematic diagram of another application scenario of a vehicle summoning method according to this application;

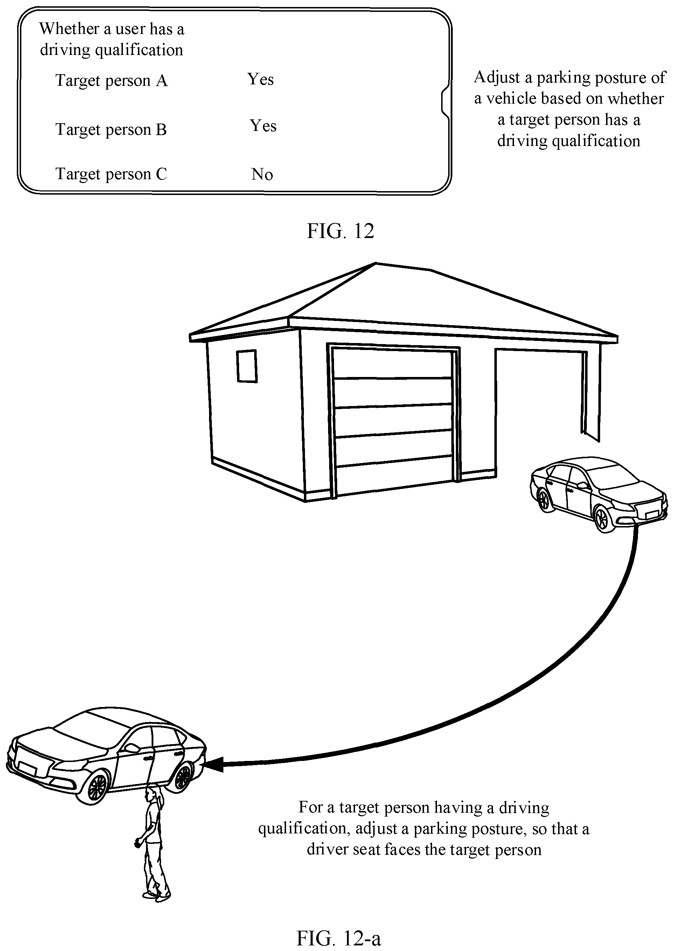

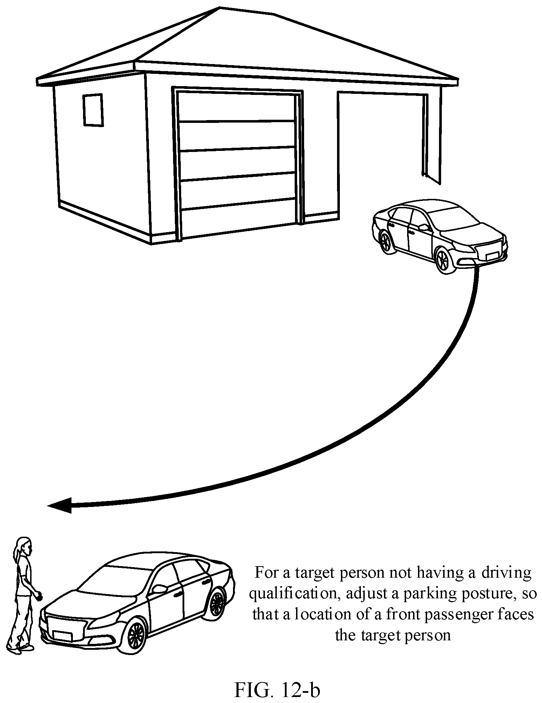

FIG. 12 is a schematic diagram of another application scenario of a vehicle summoning method according to this application;
FIG. 12-a is a schematic diagram of another application scenario of a vehicle summoning method according to this application;
FIG. 12-b is a schematic diagram of another application scenario of a vehicle summoning method according to this application;

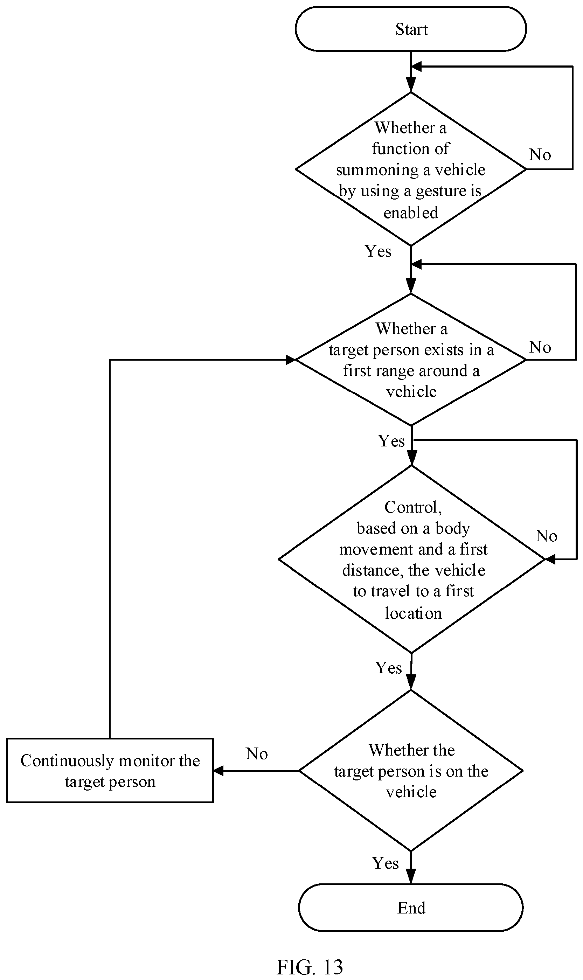

FIG. 13 is a schematic flowchart of another vehicle summoning method according to an embodiment of this application;

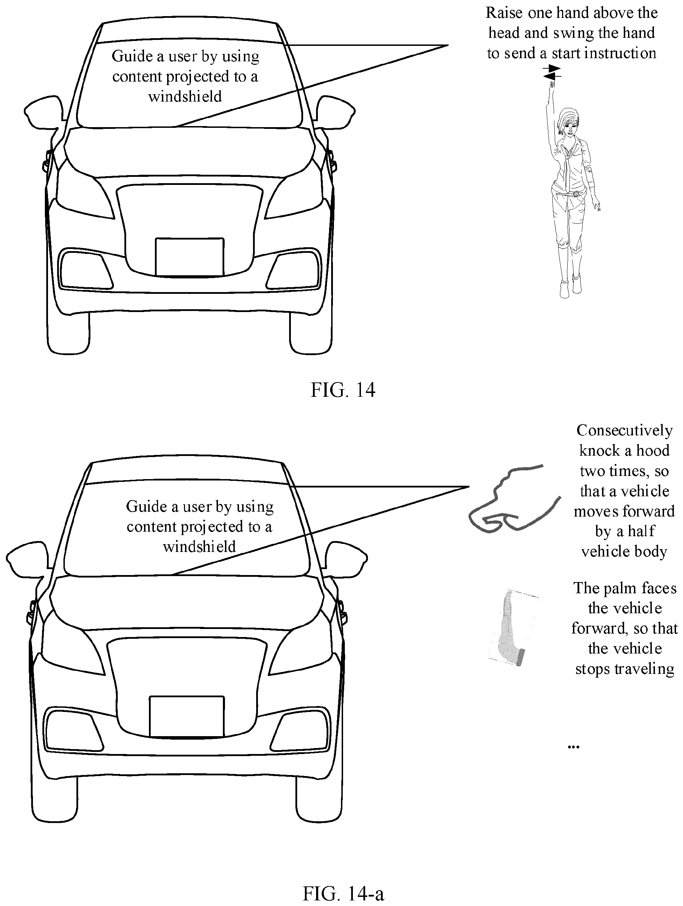

FIG. 14 is a schematic diagram of another application scenario of a vehicle summoning method according to this application;
FIG. 14-a is a schematic diagram of another application scenario of a vehicle summoning method according to this application;

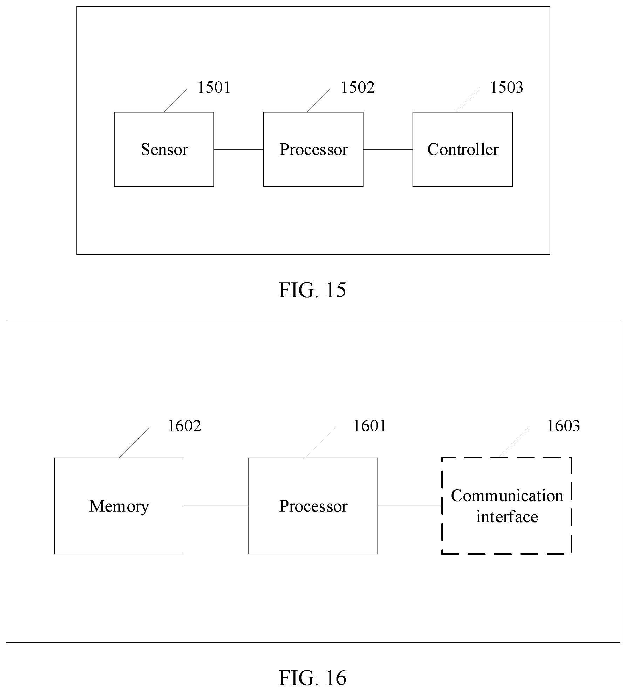

FIG. 15 is a schematic diagram of a structure of a vehicle according to an embodiment of this application;
FIG. 16 is a schematic diagram of a structure of another vehicle according to an embodiment of this application; and

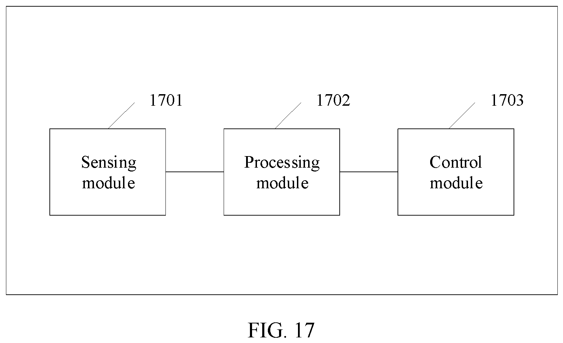

FIG. 17 is a schematic diagram of a structure of another vehicle according to an embodiment of this application.

### DESCRIPTION OF EMBODIMENTS

Embodiments of this application provide a vehicle summoning method and a related device, to allow a user to control, by using a body movement, a vehicle to travel out of a target area.

The following describes the embodiments of this application with reference to accompanying drawings. A person of ordinary skill in the art may learn that, with development of technologies and emergence of a new scenario, the technical solutions provided in the embodiments of this application are also applicable to a similar technical problem.

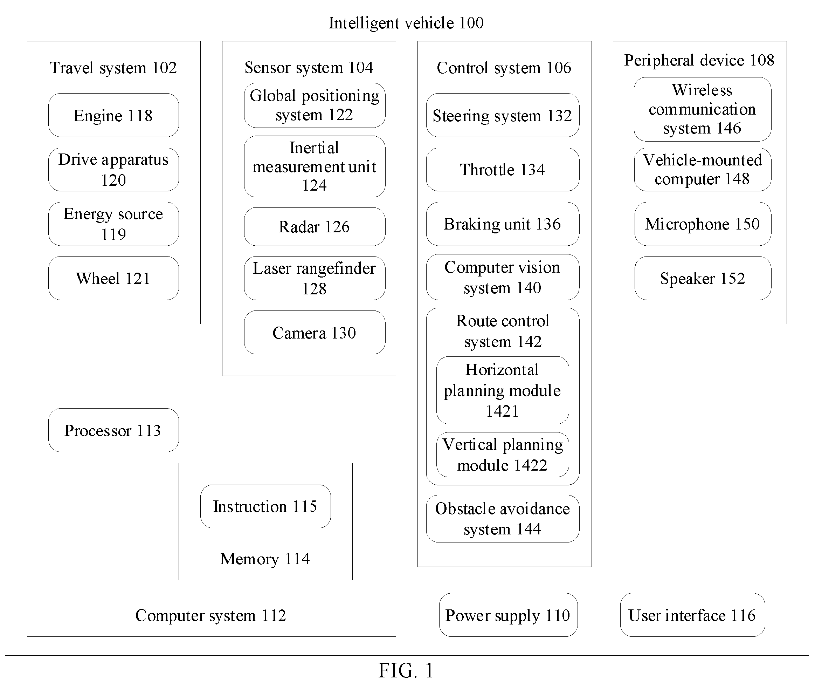

For ease of understanding of this solution, in the embodiments of this application, a structure of an intelligent vehicle is first described with reference to FIG. 1. FIG. 1 is a schematic diagram of a structure of an intelligent vehicle according to an embodiment of this application. An intelligent vehicle 100 is configured to be in a complete or partial self-driving mode. For example, when a user is inside the intelligent vehicle 100, the intelligent vehicle 100 may control the intelligent vehicle while in the self-driving mode, and may determine current statuses of the vehicle and an ambient environment thereof by using a manual operation, to determine a possible behavior of at least one another vehicle in the ambient environment, determine a confidence level corresponding to a possibility that the another vehicle performs the possible behavior, and control the intelligent vehicle 100 based on the determined information. When the intelligent vehicle 100 is in the self-driving mode, the intelligent vehicle 100 may be configured to be operated without interacting with a person. When a user is outside the intelligent vehicle 100, after obtaining a body instruction of the user, the intelligent vehicle 100 may control, based on the body instruction of the user, the intelligent vehicle to start traveling, determine a possible behavior of at least one another vehicle in an ambient environment in a traveling process, determine a confidence level corresponding to a possibility that the another vehicle performs the possible behavior, and control the intelligent vehicle 100 based on the determined information, for example, control, in the traveling process, the intelligent vehicle 100 to avoid an obstacle.

The intelligent vehicle 100 may include various subsystems such as a travel system 102, a sensor system 104, a control system 106, one or more peripheral devices 108, a power supply 110, a computer system 112, and a user interface 116. Optionally, the intelligent vehicle 100 may include more or fewer subsystems, and each subsystem may include a plurality of components. In addition, the subsystems and the components of the intelligent vehicle 100 may be interconnected in a wired or wireless manner.

The travel system 102 may include a component that provides power for the intelligent vehicle 100. In an embodiment, the travel system 102 may include an engine 118, an energy source 119, a drive apparatus 120, and a wheel 121.

The engine 118 may be an internal combustion engine, a motor, an air compression engine, or another type of engine combination, for example, a hybrid engine including a gasoline engine and a motor, or a hybrid engine including an internal combustion engine and an air compression engine. The engine 118 converts the energy source 119 into mechanical energy. Examples of the energy source 119 include gasoline, diesel, other petroleum-based fuel, propane, other compressed-gas-based fuel, ethanol, a solar panel, a battery, and another power source. The energy source 119 may also provide energy for another system of the intelligent vehicle 100. The drive apparatus 120 may transfer mechanical power from the engine 118 to the wheel 121. The drive apparatus 120 may include a gearbox, a differential, and a drive shaft. In an embodiment, the drive apparatus 120 may further include another component such as a clutch. The drive shaft may include one or more shafts that may be coupled to one or more wheels 121.

The sensor system 104 may include several sensors that sense information about an ambient environment of the intelligent vehicle 100. For example, the sensor system 104 may include a global positioning system 122 (the positioning system may be a global positioning system GPS, or may be a BeiDou system or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, and an oil temperature gauge) of an internal system of the monitored intelligent vehicle 100. One or more pieces of sensor data from the sensor may be used to detect a person and a corresponding characteristic (for example, a location, a shape, a direction, and a speed) thereof. The detection and identification are key functions for a safe operation of the intelligent vehicle 100.

The positioning system 122 may be configured to estimate a geographical location of the intelligent vehicle 100. The IMU 124 is configured to sense location and orientation changes of the intelligent vehicle 100 based on an inertial acceleration. In an embodiment, the IMU 124 may be a combination of an accelerometer and a gyroscope. The radar 126 may sense an object in the ambient environment of the intelligent vehicle 100 by using a radio signal, and may be represented as millimeter-wave radar or laser radar. In some embodiments, in addition to an object, the radar 126 may be further configured to sense a speed and/or a proceeding direction of the object. The laser rangefinder 128 may sense, by using a laser, an object in an environment in which the intelligent vehicle 100 is located. In some embodiments, the laser rangefinder 128 may include one or more laser sources, a laser scanner, one or more detectors, and another system component. The camera 130 may be configured to capture a plurality of images of the ambient environment of the intelligent vehicle 100. The camera 130 may be a static camera or a video camera.

The control system 106 controls operations of the intelligent vehicle 100 and the components thereof. The control system 106 may include various components, including a steering system 132, a throttle 134, a braking unit 136, a computer vision system 140, a route control system 142, and an obstacle avoidance system 144.

The steering system 132 may be operated to adjust a proceeding direction of the intelligent vehicle 100. For example, in an embodiment, the steering system 132 may be a steering wheel system. The throttle 134 is configured to: control an operation speed of the engine 118, and control a speed of the intelligent vehicle 100. The braking unit 136 is configured to control the intelligent vehicle 100 to decelerate. The braking unit 136 may use friction to slow down the wheel 121. In another embodiment, the braking unit 136 may convert kinetic energy of the wheel 121 into a current. The braking unit 136 may reduce a rotation speed of the wheel 121 in another form, to control the speed of the intelligent vehicle 100. The computer vision system 140 may be operated to process and analyze an image captured by the camera 130, to identify an object and/or a feature in the ambient environment of the intelligent vehicle 100. The object and/or the feature may include a traffic signal, a road boundary, and an obstacle. The computer vision system 140 may use an object recognition algorithm, a structure from motion (Structure from Motion, SFM) algorithm, video tracking, and other computer vision technologies. In some embodiments, the computer vision system 140 may be configured to: map an environment, track an object, estimate a speed of an object, and the like. The route control system 142 is configured to determine a driving route and a driving speed of the intelligent vehicle 100. In some embodiments, the route control system 142 may include a horizontal planning module 1421 and a vertical planning module 1422. The horizontal planning module 1421 and the vertical planning module 1422 are respectively configured to determine the driving route and the driving speed of the intelligent vehicle 100 based on data from the obstacle avoidance system 144, the GPS 122, and one or more predetermined maps. The obstacle avoidance system 144 is configured to identify, evaluate, and avoid or bypass, in another manner, an obstacle in an environment of the intelligent vehicle 100. The obstacle may be represented as an actual obstacle and a virtual moving body that may collide with the intelligent vehicle 100. In an embodiment, a component other than those shown and described in the figure may be added to or included in the control system 106. Alternatively, some of the foregoing components may be deleted.

The intelligent vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152. In some embodiments, the peripheral device 108 provides a means for interaction between a user of the intelligent vehicle 100 and the user interface 116. For example, the vehicle-mounted computer 148 may provide information for the user of the intelligent vehicle 100. The user interface 116 may further operate the vehicle-mounted computer 148 to receive a user input. The vehicle-mounted computer 148 may perform operations through a touchscreen. In other cases, the peripheral device 108 may provide a means for communication between the intelligent vehicle 100 and another device located in the vehicle. For example, the microphone 150 may receive audio (for example, a voice command or another audio input) from the user of the intelligent vehicle 100. Similarly, the speaker 152 may output audio to the user of the intelligent vehicle 100 (for example, prompt a user outside the vehicle that the vehicle is about to enter an execution state). The wireless communication system 146 may perform wireless communication with one or more devices directly or by using a communication network. For example, the wireless communication system 146 may use 3G cellular communication such as code division multiple access (code division multiple access, CDMA), EVD0, a global system for mobile communications (global system for mobile communications, GSM), or a general packet radio service (general packet radio service, GPRS), 4G cellular communication such as long term evolution (long term evolution, LTE), or 5G cellular communication. The wireless communication system 146 may perform communication by using a wireless local area network (wireless local area network, WLAN). In some embodiments, the wireless communication system 146 may directly communicate with a device by using an infrared link, Bluetooth, or ZigBee. Other wireless protocols such as various vehicle communication systems may be used, for example, the wireless communication system 146 may include one or more dedicated short range communications (dedicated short range communications, DSRC) devices. These devices may include public and/or private data communication between vehicles and/or roadside stations.

The power supply 110 may supply power to various components of the intelligent vehicle 100. In an embodiment, the power supply 110 may be a rechargeable lithium-ion or lead-acid battery. One or more battery packs of the battery may be configured as a power supply to supply power to various components of the intelligent vehicle 100. In some embodiments, the power supply 110 and the energy source 119 may be implemented together, for example, configured together as in some battery electric vehicles.

Some or all functions of the intelligent vehicle 100 are controlled by the computer system 112. The computer system 112 may include at least one processor 113, and the processor 113 executes instructions 115 stored in a non-transient computer-readable medium such as a memory 114. The computer system 112 may be a plurality of computing devices that control an individual component or a subsystem of the intelligent vehicle 100 in a distributed manner. The processor 113 may be any conventional processor such as a commercially available central processing unit (central processing unit, CPU). Optionally, the processor 113 may be a dedicated device such as an application-specific integrated circuit (application-specific integrated circuit, ASIC) or another hardware-based processor. Although FIG. 1 functionally shows the processor, the memory, and another component of the computer system 112 in a same block, a person of ordinary skill in the art should understand that the processor or the memory may actually include a plurality of processors or memories that are not stored in a same physical housing. For example, the memory 114 may be a hard disk drive or another storage medium located in a housing different from a housing of the computer system 112. Therefore, references to the processor 113 or the memory 114 are understood as including references to a set of processors or memories that may or may not operate concurrently. Different from using a single processor to perform the steps described herein, some components such as a steering component and a deceleration component may include respective processors. The processor performs only computation related to a component-specific function. In various aspects described herein, the processor 113 may be far away from the intelligent vehicle 100, and perform wireless communication with the intelligent vehicle 100. In other aspects, some of the processes described herein are executed by the processor 113 disposed in the intelligent vehicle 100, and other processes are executed by a remote processor 113, including necessary steps for performing a single operation. In some embodiments, the memory 114 may include the instructions 115 (for example, program logic), and the instructions 115 may be executed by the processor 113 to perform various functions of the intelligent vehicle 100, including the functions described above. The memory 114 may also include additional instructions, including instructions used to send data to, receive data from, interact with, and/or control one or more of the travel system 102, the sensor system 104, the control system 106, and the peripheral device 108. Changing lanes to the right is used as an example. In this case, a human driver needs to perform the following operations: Step 1, the driver determines a lane change occasion by considering a safety factor and a traffic rule factor; step 2, the driver plans a driving track; and step 3, the driver controls a throttle, a brake, and a steering wheel to enable the vehicle to travel along a predetermined track. Corresponding to the intelligent vehicle, the foregoing operations may be separately performed by a behavior planner (behavior planner, BP), a motion planner (motion planner, MoP), and a motion controller (Controller) of the intelligent vehicle. The BP is responsible for delivering a high-level decision, the MoP is responsible for planning an expected track and speed, and the control is responsible for operating the throttle, the brake, and the steering wheel to enable the intelligent vehicle to follow a target track and reach a target speed. It should be understood that related operations performed by the behavior planner, the motion planner, and the motion controller may be the instructions 115 in the memory 114 that are executed by the processor 113 shown in FIG. 1. The instructions 115 may be used to instruct the route control system 142. In the embodiments of this application, the behavior planner, the motion planner, and the motion controller are sometimes collectively referred to as a planning and control module.

In addition to the instructions 115, the memory 114 may further store data such as a road map, route information, a location, a direction, and a speed of the vehicle, other such vehicle data, and other information. Such information may be used by the intelligent vehicle 100 and the computer system 112 when the intelligent vehicle 100 operated in an autonomous mode, a semi-autonomous mode, and/or a manual mode. The user interface 116 is configured to provide information for or receive information from the user of the intelligent vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control a function of the intelligent vehicle 100 based on inputs received from various subsystems (for example, the travel system 102, the sensor system 104, and the control system 106) and the user interface 116. For example, the computer system 112 may control the steering system 132 by using an input from the control system 106, to avoid an obstacle detected by the sensor system 104 and the obstacle avoidance system 144. In some embodiments, the computer system 112 may be operated to provide control for many aspects of the intelligent vehicle 100 and the subsystems thereof.

Optionally, one or more of the foregoing components may be mounted separately from or associated with the intelligent vehicle 100. For example, the memory 114 may be partially or totally separated from the intelligent vehicle 100. The foregoing components may be communicatively coupled together in a wired and/or wireless manner.

Optionally, the foregoing components are merely examples. In actual application, components in the foregoing modules may be added or deleted based on an actual requirement. FIG. 1 should not be understood as a limitation on this embodiment of this application. An intelligent vehicle traveling on a road, such as the foregoing intelligent vehicle 100, may identify an object in an ambient environment of the intelligent vehicle to determine to adjust a current speed. The object may be another vehicle, a traffic control device, or another type of object. In some examples, each identified object may be considered independently, and a to-be-adjusted speed of the intelligent vehicle is determined based on respective characteristics of the objects, for example, a current speed of the object, an acceleration of the object, or a distance between the object and the vehicle.

Optionally, the intelligent vehicle 100 or a computing device such as the computer system 112, the computer vision system 140, and the memory 114 in FIG. 1 associated with the intelligent vehicle 100 may predict a behavior of the identified object based on the characteristics of the identified object and a status (for example, traffic, rain, and ice on a road) of the ambient environment. Optionally, all identified objects depend on a behavior of each other, and therefore all the identified objects may be considered together to predict a behavior of a single identified object. The intelligent vehicle 100 can adjust a speed of the intelligent vehicle 100 based on the predicted behavior of the identified object. In other words, the intelligent vehicle 100 can determine, based on the predicted behavior of the object, a specific stable state to which the vehicle needs to be adjusted (for example, an acceleration operation, a deceleration operation, or a stop operation). In the process, another factor may be considered to determine the speed of the intelligent vehicle 100, for example, a lateral location of the intelligent vehicle 100 on a driving road, a curvature of the road, and proximity between the intelligent vehicle 100 and each of static and dynamic objects. In addition to providing an instruction for adjusting the speed of the intelligent vehicle, the computing device may further provide an instruction for modifying a steering angle of the intelligent vehicle 100, so that the intelligent vehicle 100 follows a given track and/or maintains safe lateral and longitudinal distances from an object (for example, a car in a neighboring lane on a road) near the intelligent vehicle 100.

The intelligent vehicle 100 may be a car, a truck, a motorcycle, a bus, a lawn mower, a recreational vehicle, a playground vehicle, a construction device, or the like. This is not limited in this embodiment of this application.

With reference to the foregoing descriptions, an embodiment of this application provides a vehicle summoning method, and the method may be applied to the intelligent vehicle 100 shown in FIG. 1. In this embodiment of this application, the vehicle summoning method provided in this application is mainly described from the following aspects.

First, to present the solutions provided in this application more clearly, an application scenario to which the solutions provided in this application may be applicable is described. A typical application scenario of the solutions provided in this application is as follows: A vehicle parks in a narrow area. When a driver or a passenger expects to enter the vehicle, due to the narrow space, a vehicle door easily collides with a surrounding obstacle (for example, a wall or a vehicle) if the door is forcibly opened.

Then, based on the foregoing typical application scenario, the vehicle summoning method provided in this application is described. In the vehicle summoning method provided in this application, a vehicle may control, based on a body instruction of an instruction sender, the vehicle to move out of specific space (for example, move out of a narrow parking place). In the vehicle summoning method provided in this application, user experience of the vehicle can be improved, and a problem that a vehicle door collides with a surrounding wall/vehicle if the door is forcibly opened in narrow space can be avoided, thereby avoiding a problem such as property damage.

Subsequently, to enable the driver or the passenger to obtain better user experience of the vehicle, the vehicle may further control a parking posture and a parking location of the vehicle based on a distance between the instruction sender and the vehicle.

In addition, to enable the vehicle to accurately respond to a body instruction of the instruction sender and perform a corresponding action, a start operation for the body instruction may be further set. After the start operation is correctly performed, the vehicle controls, in response to the body instruction of the instruction sender, the vehicle to move out of specific space. Alternatively, a stop instruction may be further set, so that a priority of the stop instruction is higher than that of another body instruction. After obtaining the stop instruction, the vehicle controls the vehicle to stop, to ensure safety of summoning the vehicle by using the body instruction.

Based on the foregoing aspects, the following describes the vehicle summoning method provided in this application.

FIG. 2 is a schematic diagram of an application scenario of a vehicle summoning method according to this application. In a parking lot scenario shown in FIG. 2, because a parking place in which an ego vehicle is located is narrow, and another vehicle is parked in a neighboring parking place of the ego vehicle, inconvenience is caused to picking up the vehicle. The inconvenience of picking up the vehicle may be reflected as that a driver/passenger is inconvenient to open a door to enter the vehicle, a vehicle door easily collides with a surrounding vehicle if the door is forcibly opened, or the like. In these scenarios, based on the method provided in this application, the driver/passenger may send a body instruction, and in response to the body instruction, the ego vehicle controls the ego vehicle to travel out of the parking place. For example, referring to FIG. 2-a, in response to the body instruction, the ego vehicle controls a partial vehicle body of the ego vehicle to travel out of the parking place, to help the driver or the passenger enter the vehicle. For another example, referring to FIG. 2-b, in response to the body instruction, the ego vehicle controls the ego vehicle to totally travel out of the parking place. In the scenarios shown in FIG. 2-a and FIG. 2-b, the ego vehicle controls, based on a body movement, the ego vehicle to travel straight forward by a distance. In the solutions provided in this application, the ego vehicle may further control, based on the body movement, the ego vehicle to reverse or turn to travel. The following is described with reference to FIG. 2-c. Referring to a parking lot scenario shown in FIG. 2-c, a distance between two rows of parking places in the parking lot is very close. If the ego vehicle is controlled to travel straight forward by a distance (for example, the ego vehicle is controlled to totally travel out of a current parking place), the ego vehicle may collide with another vehicle that stops in a parking place ahead. In the solutions provided in this application, the driver/the passenger may send a body instruction, and the ego vehicle controls, in response to the body instruction, the ego vehicle to turn left to travel by a distance. Therefore, the driver or the passenger can conveniently enter the vehicle, and the ego vehicle does not collide with a vehicle that stops in a neighboring parking area.

It should be noted that, if a passing condition of an ambient environment of the vehicle allows (for example, no obstacle), in response to the body instruction, the ego vehicle may control, in a timely manner, the ego vehicle to travel out of the parking place; or if a passing condition of an ambient environment of the vehicle does not allow, in response to the body instruction, the ego vehicle may suspend control of the ego vehicle to travel out of the parking place, or send prompt information to notify the driver or the passenger that it is not suitable to travel out of the parking place in a current scenario.

FIG. 2-d is a schematic diagram of another application scenario of a vehicle summoning method according to this application. In a garage scenario shown in FIG. 2-d, some private garages may have limited storage space, and the driver/passenger is inconvenient to pick up the vehicle after entering the garage. Generally, the driver/passenger should be careful when opening a vehicle door to protect a vehicle body from scratching a wall of the garage. In these scenarios, based on the method provided in this application, the driver/passenger may send a body instruction, and in response to the body instruction, the ego vehicle controls the ego vehicle to travel out of the garage. For example, referring to FIG. 2-e, in response to the body instruction, the ego vehicle controls the ego vehicle to stop after traveling out of the garage, so that the driver can smoothly pick up the vehicle without entering the garage. For another example, referring to FIG. 2-f, when a passing condition of an ambient environment of the vehicle allows, the instruction sender may continuously send a body instruction, and in response to the continuous body instruction, the ego vehicle controls the ego vehicle to travel out of the garage, and keeps following (including traveling straight, turning, and the like) the instruction sender until the ego vehicle executes all body instructions and is parked in a preset range around the instruction sender.

FIG. 3 is a schematic diagram of an applicable scenario of a vehicle summoning method. To enable the driver/passenger to control the vehicle outside the vehicle, one manner is that the driver/passenger remotely controls the vehicle by using a terminal or a key, to control the vehicle to move forward or backward. However, in this manner, because the driver/passenger needs to operate the terminal or the vehicle key, inconvenience is caused to the driver/passenger in some scenarios. These cases that easily cause inconvenience include the following: (1) The driver/passenger who expects to enter the vehicle is inconvenient to pull out the terminal device or take out the vehicle key. (2) A network signal in a parking lot is poor, and a control effect of a mobile phone terminal is affected, resulting in poor experience. (3) To summon a car by using a remote control device such as a terminal device or a vehicle key, an operation step needs to be added, causing inconvenience to the user. In these scenarios, based on the method provided in this application, the user (for example, the driver or the passenger) of the vehicle may send a body instruction, and the ego vehicle controls, in response to the body instruction, the ego vehicle to move forward or backward or turn to move. For example, referring to FIG. 2-a and FIG. 2-b, when the vehicle stops in an underground parking place, the control effect of the mobile phone terminal is interfered due to a poor network signal, resulting in poor experience. However, in the solutions provided in this application, the user (for example, the driver or the passenger) of the vehicle may send a body instruction, and in response to the body instruction, the ego vehicle controls the ego vehicle to travel out of the parking place, thereby improving user experience. In the vehicle summoning method shown in FIG. 3, when the vehicle needs to be controlled outside the vehicle, if a manner of remotely controlling the vehicle by using the terminal or the key is used, the driver/passenger further needs to first pull out the terminal or the key, and then remotely control the vehicle. However, in the solutions provided in this application, no additional action is required, and the driver/passenger may directly summon the vehicle by using a body instruction, thereby simplifying a vehicle summoning process, helping the driver/passenger summon the vehicle, and improving summoning experience. Referring to FIG. 3-a, in some scenarios, when the vehicle detects that the user (for example, the driver or the passenger) of the vehicle carries an item in the hand, the vehicle may further adjust a parking posture in response to a body instruction. In this way, after the vehicle stops, a location of a trunk or a vehicle door of the vehicle directly faces the instruction sender, so that the driver/the passenger conveniently places the item on the vehicle.

The foregoing describes typical scenarios to which the vehicle summoning method provided in this application may be applicable. The following describes, based on the foregoing several typical scenarios, the vehicle summoning method provided in the embodiments of this application.

FIG. 4 is a schematic flowchart of a vehicle summoning method according to an embodiment of this application.

The vehicle summoning method provided in this application may include the following steps:
401: Obtain, when a vehicle is in a parking state, identifier information of a person in a first range around the vehicle.

The first range may be understood as a preset range. For example, if it is preset that the first range is a range within 500 meters around the vehicle, the vehicle obtains identifier information of a person within 500 meters around the vehicle. For another example, if it is preset that the first range is a range within 100 meters around the vehicle, the vehicle obtains identifier information of a person within 100 meters around the vehicle. The first range may alternatively be understood as a range in which a sensor system of the vehicle can perform sensing. For example, the sensing range may be a range in which a camera in the sensor system can perform detection. The first range around the vehicle is set, so that when a driver/passenger is in a specific range around the vehicle, the vehicle can sense the driver/passenger in a timely manner.

The identifier information of the person includes but is not limited to facial information of the person, figure information of the person, and fingerprint information of the person. There may be one or more types of identifier information of the person. For example, the identifier information may include facial information, figure information, and fingerprint information, or the identifier information of the person may include only facial information.

In a possible implementation, the vehicle may obtain the identifier information of the person in the first range in real time. When the vehicle is set to obtain the identifier information of the person in the first range in real time, after the vehicle is in a parking state, the vehicle is always in a state of obtaining the identifier information of the person in the first range.

In a possible implementation, the vehicle may obtain the identifier information of the person in the first range periodically. When the vehicle is set to periodically obtain the identifier information of the person in the first range, after the vehicle is in a parking state, the vehicle obtains the identifier information of the person in the first range at an interval of preset duration.

In a possible implementation, when learning that a target terminal exists in the first range, the vehicle may obtain the identifier information of the person in the first range. The target terminal may be understood as a terminal that establishes a binding relationship with the vehicle. For example, the target terminal may be a vehicle key of the vehicle or a mobile terminal (for example, a mobile phone) of a target person. When the target terminal exists in the first range around the vehicle, the vehicle may sense the target terminal in a timely manner. When sensing that the target terminal exists in the first range, the vehicle starts to obtain the identifier information of the person in the first range around the vehicle. In this manner, the vehicle does not need to obtain the identifier information of the person in the first range in real time, thereby improving efficiency of obtaining the target person by the vehicle.

402: When the identifier information of the person in the first range meets a preset condition, determine, as a target person, the person who meets the preset condition.

The target person may be understood as a user who establishes a binding relationship with the vehicle in advance. The vehicle may obtain identifier information of at least one target person in advance. The identifier information includes but is not limited to facial information, figure information, and fingerprint information. The vehicle may locally store the identifier information of the at least one target person, or may obtain the identifier information of the at least one target person from a cloud. In this application, a user whose identifier information is obtained by the vehicle is referred to as the target person, and the vehicle can respond only to a body instruction of the target person and perform an action. A user who does not establish a binding relationship with the vehicle in advance becomes another user, and the vehicle does not respond to a body instruction of the another person.

In a possible implementation, the vehicle locally stores the identifier information of the target person. An example in which the identifier information of the target person is facial information is used for description. The facial information of the target person may be obtained by using an image collection device mounted on the vehicle, or the facial information of the target person may be obtained by using a terminal (for example, a mobile phone of the target person), and the terminal sends the obtained facial information of the target person to the vehicle. For example, a possible operation procedure is provided. Referring to FIG. 5, the target person may choose, by using a vehicle-mounted computer, whether to enable a function of summoning a vehicle by using a gesture. After the function of summoning a vehicle by using a gesture is enabled, the vehicle may obtain a face image of the target person by using the image collection device, and store the face image in the vehicle. The target person may be a vehicle owner, or may be a person who is authorized by the vehicle owner to use the function of summoning a vehicle by using a gesture. For example, the target person may be a driver or a passenger, that is, there may be a plurality of target persons, and the vehicle may obtain face images of the plurality of persons by using the image collection device. In an actual use process of the vehicle, a user of the vehicle may not be the target person. For example, for a taxi for which the function of summoning a vehicle by using a gesture is enabled, a user who takes the taxi may not be the target person. If the user is not the target person, the user cannot summon the vehicle by using the function of summoning a vehicle by using a gesture. Only when the user is the target person, the user can summon the vehicle by using a gesture.

Referring to FIG. 5-a, the vehicle may detect, by using obtained image data in the first range around the vehicle, whether the target person exists in the first range. For example, the vehicle may extract facial information by using the obtained image data in the first range around the vehicle, and match the facial information with the facial information that is of the target person and that is prestored in the vehicle. If the matching fails, the vehicle determines that the target person does not exist in the first range. If the matching succeeds, the vehicle determines that the target person exists in the first range, that is, if the obtained identifier information of the person in the first range matches the prestored identifier information of the target person, it is considered that the identifier information of the person in the first range meets the preset condition. In a possible implementation, when a similarity between the obtained facial information and the identifier information that is of the target person and that is prestored in the vehicle exceeds a threshold, it is determined that the matching succeeds; or when a similarity between the obtained facial information and the identifier information that is of the target person and that is prestored in the vehicle does not exceed a threshold, it is determined that the matching fails. A person skilled in the art may set, based on a requirement, a specific image collection manner and a specific manner of performing identity authentication based on a collected image. Details are not described in this application again. For example, a facial recognition method is used as an example. For the facial recognition method, one or more of the following methods may be used: a feature-based recognition algorithm (feature-based recognition algorithm, FRA), an appearance-based recognition algorithm (appearance-based recognition algorithm, ARA), a template-based recognition algorithm (template-based recognition algorithm, TRA), and a recognition algorithm using neural network (recognition algorithm using neural network, RAUNN). The facial recognition information may include facial feature information, facial curve information, and the like.

In a possible implementation, the vehicle obtains the identifier information of the target person from the cloud. For a shared vehicle, the target person may be a user who rents the vehicle in a specific time period. The user who rents the vehicle may upload identifier information to the cloud by using a terminal, and the vehicle may obtain, from the cloud, the identifier information of the user who rents the vehicle. FIG. 6 is a schematic diagram of a possible operation procedure. A user may place a vehicle renting order by using a vehicle renting application (application, APP) installed on a terminal. If the vehicle renting app obtains camera permission of the terminal, the terminal may obtain a face image of the user, and upload the obtained face image to the cloud. The cloud may send, to a rented vehicle, the face image (optionally, other information such as vehicle renting time information may be further included, where because the information is irrelevant to the invention point of this solution, details are not described in this embodiment of this application) of the user who rents the vehicle, so that the rented vehicle obtains the facial information of the user from the cloud. When the rented vehicle identifies that facial information of the person in the first range matches the obtained facial information of the user, the rented vehicle determines that the target person exists in the first range, and may perform a corresponding traveling action in response to a body movement of the user. The embodiment corresponding to FIG. 6 is merely an example for description. In an actual application scenario, more steps may be included. For example, after one order is completed, the rented vehicle may delete identifier information of the user corresponding to the order.

403: Obtain a body movement of the target person.

The body movement in this application may be a gesture movement or a posture movement. The gesture may include a mid-air gesture (for example, a gesture made directly in front of the vehicle) or a touch gesture (for example, touching a hood of the vehicle). The vehicle may obtain a correspondence between a specific body movement and a vehicle traveling action in advance. For example, when the vehicle is set at delivery, a body movement is specified, and how the vehicle controls traveling of the vehicle based on the body movement is specified. For another example, the user may self-define a correspondence between a body movement and a vehicle traveling action. In the solutions provided in this application, the vehicle may control a traveling direction of the vehicle based on the body movement of the target person, and may further control a traveling distance of the vehicle in a specific direction based on the body movement of the target person.

For example, the following provides several possible correspondences between a body movement and a vehicle traveling action.

Referring to FIG. 7, a possible body movement is a "come-over" gesture (palm up or palm down). In response to the gesture, the vehicle may control the vehicle to travel straight forward or backward, or may control, based on the gesture, the vehicle to travel forward/backward by a preset distance (for example, move a partial vehicle body or move to a user who makes the gesture movement), or the target person continuously makes the gesture, and the vehicle may keep following the target person in response to the gesture.

Referring to FIG. 7-a, another possible body movement is a left-turn gesture. The right arm of the target person is naturally placed on one side of the body, and the left arm is raised to be parallel to the ground. In response to the gesture, the vehicle may control the vehicle to turn left to travel, or may control the vehicle to turn left to travel by a preset distance.

Referring to FIG. 7-b, another possible body movement is a right-turn gesture. The left arm of the target person is naturally placed on one side of the body, and the right arm is raised to be parallel to the ground. In response to the gesture, the vehicle may control the vehicle to turn right to travel, or may control the vehicle to turn left to travel by a preset distance.

Referring to FIG. 7-c1, another possible body movement is that the palm faces the vehicle forward, and the vehicle may immediately stop traveling in response to the gesture.

In a possible implementation, the body movement in this solution may be understood with reference to a gesture signal of a traffic police. For example, in the gesture signal of the traffic police, a gesture signal for left-turn traveling is that the right arm horizontally extends forward with the palm forward, and the left arm and the palm swing straight ahead to the right with the palm rightward. In response to the gesture, the vehicle may control the vehicle to turn left to travel, or may control the vehicle to turn left to travel by a preset distance.

Referring to FIG. 7-d, another possible body movement is a touching gesture, for example, knocking a vehicle body. In a scenario shown in FIG. 7-d, the target person knocks the hood of the vehicle. In response to the gesture, the vehicle may control, the vehicle to move forward or move forward by a specific distance. For another example, a route is drawn on the vehicle. Referring to FIG. 7-e, a straight line may be drawn by continuously touching the hood of the vehicle by using a finger. In response to the gesture, the vehicle may control the vehicle to move forward or move forward by a specific distance. Referring to FIG. 7-f and FIG. 7-g, a curve may be drawn by continuously touching the hood of the vehicle by using a finger. In response to the gesture, the vehicle may control the vehicle to turn left or turn right to travel, or control the vehicle to turn left to travel by a distance or turn right to travel by a distance. In a possible implementation, it may be set that a route is drawn on the vehicle by using a single finger (for example, FIG. 7-e), or it may be set that a route is drawn on the vehicle by using a plurality of fingers.

It should be noted that, the body movement and the action may be in a many-to-one relationship. For example, a plurality of gestures may correspond to one action. Referring to FIG. 7 and FIG. 7-d, for the come-over gesture and the gesture of knocking the hood of the vehicle, in response to either of the two gestures, the vehicle may control the vehicle to move forward or move forward by a specific distance. Referring to FIG. 7-c2, another possible gesture is making a cross by using both hands, and the vehicle immediately stops traveling in response to the gesture. FIG. 7-c1 and FIG. 7-c2 show two different gestures. When obtaining either of the two gestures, the vehicle may immediately stop traveling.

In addition, it should be noted that the several possible body movements shown in FIG. 7 to FIG. 7-g are merely examples for description, and do not represent that only the several body movements can be used in this application. The correspondence between a body movement and an action shown in FIG. 7 to FIG. 7-g represents only one possible correspondence, and should not be construed as a limitation on the solutions provided in this application.

404: Control, based on the body movement, the vehicle to travel to a first location.

In a preferred implementation, the vehicle is controlled, based on the body movement, to travel in a first direction, and the vehicle is controlled, based on a first distance, to travel in the first direction by a second distance and then stop traveling.

The first distance is a distance between the target person and the vehicle.

The vehicle may obtain the distance between the target person and the vehicle in a plurality of manners. For example, the following provides several possible manners of obtaining the first distance.

In a possible implementation, the first distance may be obtained by using a portable device of the target person. The portable device of the target person includes a mobile terminal, a vehicle key, and the like. For example, the target person carries the vehicle key, and the distance is determined by using a radio frequency signal transmitted between a low-frequency antenna of the vehicle key and a base station of the vehicle body. For another example, the target person carries a mobile phone, and the mobile phone positions the target person, and synchronizes location information of the target person to the vehicle.

Alternatively, the first distance may be measured by the vehicle. When the target person enters the first range of the vehicle, the vehicle measures the distance between the target person and the vehicle by using a sensor of the vehicle. The distance between the target person and the vehicle may be understood as a distance between the target person and the sensor mounted on the vehicle. , whether the distance is a distance between a central point of the target person and the sensor or a distance between another location of the target person and the sensor may vary with different sensor configurations and working principles of different sensors. This is not limited in this embodiment of this application. A method for measuring the distance between the target person and the vehicle by using the sensor of the vehicle includes but is not limited to camera ranging (monocular ranging, binocular ranging, and the like), laser radar ranging, millimeter-wave radar ranging, and ultrasonic radar ranging.

A plurality of sensors may be mounted on the vehicle. For example, a first sensor is mounted at the front location of the vehicle, and a second sensor is mounted at the rear location of the vehicle. In a possible implementation, the first distance may be obtained based on priorities of different sensors and a measurement result of one of the plurality of sensors. For example, when the front of the vehicle first travels into a parking place, the first distance is preferentially obtained based on the distance that is between the target person and the vehicle and that is obtained by the first sensor; and when the rear of the vehicle first travels into a parking place, the first distance is preferentially obtained based on the distance that is between the target person and the vehicle and that is obtained by the second sensor. For another example, a third sensor is mounted on the roof of the vehicle, the first sensor may be set to have a highest priority, and the first distance is preferentially obtained based on the distance that is between the target person and the vehicle and that is obtained by the first sensor. The second sensor has a second highest priority. When the target person enters the first range of the vehicle, and the target person cannot be obtained by using the first sensor, the first distance is obtained based on the distance that is between the target person and the vehicle and that is obtained by the second sensor. The third sensor has a lowest priority. When the target person enters the first range of the vehicle, and the target person cannot be obtained by using the first sensor and the second sensor, the first distance is obtained based on the distance that is between the target person and the vehicle and that is obtained by the third sensor. In another possible implementation, if a plurality of first sensors are mounted at the front location of the vehicle, weighted processing may be performed on distances obtained by the first sensors, and a result obtained after weighted processing is used to obtain the first distance. If a plurality of second sensors are mounted at the rear of the vehicle, weighted processing may be performed on distances obtained by the second sensors, and a result obtained after weighted processing is used to obtain the first distance. The vehicle may control, based on the body movement and the first distance, the vehicle to travel out of specific space, for example, control the vehicle to travel out of a parking area. The parking area may be a parking place, a private garage, or any area in which the vehicle stops. The vehicle may control, based on the first distance, a distance by which the vehicle travels after the vehicle travels out of a current location. For example, when the distance between the target person and the vehicle is short, the vehicle may be controlled to travel out by a half vehicle body and then stop. For another example, when the distance between the target person and the vehicle is long, the vehicle may be controlled to travel near the target person.

In a possible manner, when the first distance is less than a first preset threshold, the vehicle is controlled to travel straight forward from the current location until the vehicle travels out of a first parking place and then stop traveling, and the first parking place is a parking place in which the vehicle is currently located. In a possible implementation, the vehicle is controlled to travel straight forward from the current location until a partial vehicle body of the vehicle travels out of a first parking place and then stop traveling, and the partial vehicle body includes at least one vehicle door of the vehicle. In a possible scenario, it is identified that a current scenario in which the ego vehicle is located is that the ego vehicle is in a first parking area, and there is an obstacle in a neighboring parking area of the first parking area, for example, there is another vehicle (also referred to as a neighboring vehicle in this application) in the neighboring parking area. If the distance between the target person and the vehicle is less than the first preset threshold, in response to the body movement, the ego vehicle may control the ego vehicle to travel out of the first parking area. For example, in the scenarios shown in FIG. 2 and FIG. 2-a, in response to the body movement, the ego vehicle may control a partial vehicle body of the ego vehicle to travel out of the parking place, or control the ego vehicle to travel out by a specific distance, so that a location of a vehicle door exceeds the neighboring vehicle. For another example, in the scenarios shown in FIG. 2 and FIG. 2-b, the ego vehicle may control the ego vehicle to totally travel out of the current parking place. In a possible scenario, it is identified that a current scenario in which the ego vehicle is located is that the ego vehicle is in a second parking area, and there is no obstacle in a neighboring parking area of the second parking area. If the distance between the target person and the vehicle is less than the first preset threshold, in response to the body movement, the ego vehicle may also control the ego vehicle to travel out of the first parking area, or the ego vehicle may control a partial vehicle body of the ego vehicle to travel out of the parking place. In addition, referring to FIG. 2-f, after controlling, in response to the body movement, the ego vehicle to travel out of the parking area, in response to a continuous body movement, the ego vehicle may control the ego vehicle to keep following a person who makes the movement, and park in a preset range around the person who makes the movement, for example, park in a range of 50 meters around the person who makes the movement.

In a possible manner, when the first distance is not less than the first preset threshold, the vehicle is controlled to travel to a preset range around the target person. In a possible scenario, if the distance between the target person and the vehicle is very long, for example, the distance between the target person and the vehicle is not less than the first preset threshold, in response to the body movement, the ego vehicle may control the ego vehicle to travel near the target person, for example, travel to the preset range around the target person. For example, if the preset range is 50 meters, the vehicle travels to a range of 50 meters around the target person. In a possible implementation, location information of the target person may be obtained, any coordinate point in the preset range around the target person is determined based on the location information of the target person, and the coordinate point is used as a destination, to control the vehicle to travel to the coordinate point. In a possible implementation, when the vehicle travels to the preset range around the target person, a coordinate point of a destination may be continuously adjusted. For example, if an obstacle exists at a coordinate point selected for the first time, a new coordinate point is reselected in the preset range as the destination. In a possible implementation, the vehicle further adjusts a parking posture. In this way, after the vehicle stops, a location of a trunk or a vehicle door of the vehicle directly faces the target person, so that the driver/passenger can conveniently place an item on the vehicle.

In a possible manner, if a passing condition of an ambient environment of the vehicle allows (for example, no obstacle), in response to the body movement of the target person, the ego vehicle may control, in a timely manner, the ego vehicle to travel out of the parking place; or if a passing condition of an ambient environment of the vehicle does not allow, in response to the body movement, the ego vehicle may suspend control of the ego vehicle to travel out of the parking place, or send prompt information (for example, voice or light blinking) to notify the driver or the passenger that it is not suitable to travel out of the parking place in a current scenario. In addition, referring to FIG. 8, in a process of controlling, based on the body movement, the vehicle to travel, the vehicle may identify a surrounding obstacle, and plan a route. When the vehicle is blocked by an obstacle and cannot travel forward, the vehicle enters a stop state, and then performs a stop action. In a possible implementation, the target person is further notified, through light blinking or sound alarm, that the vehicle is in a stop state. After the vehicle enters a stop state, the vehicle continuously monitors the ambient environment. The vehicle determines, through environment sensing, that an obstacle blocking state in the ambient environment of the vehicle is removed, and the vehicle switches from a stop state to an execution state, and continues to execute an instruction corresponding to the body movement until the action is completed. In a possible implementation, description is further provided based on the scenario shown in FIG. 8. When the vehicle is blocked by an obstacle and cannot travel forward, the vehicle enters a stop state, and the vehicle may further continuously monitor the body movement of the target person, to wait for a next operation of the target person. When an instruction corresponding to a new body movement is not received, the vehicle switches from a stop state to an execution state, to continue to execute an instruction corresponding to a previous body movement until the action is completed. If an instruction corresponding to a new body movement is received, based on a setting made in advance, the vehicle may choose to execute the instruction corresponding to the new body movement, or may choose to continue to execute an instruction corresponding to a previous body movement until the action is completed and then execute the instruction corresponding to the new body movement. The setting made in advance means that an execution mode of the vehicle after a gesture of the target person is identified may be set by using a cabin head unit, a mobile phone terminal, or the like. The execution mode may include: single input and single execution, real-time input and real-time execution (continuous input and continuous execution), and the like. Referring to FIG. 9, for the single input and single execution model, after identifying an instruction corresponding to the body movement of the target person, the vehicle executes an action corresponding to the instruction until execution of the action is completed or the vehicle enters a stop state (the stop state may be triggered by a "stop" gesture made by the target person, or may be triggered by a surrounding obstacle). In the single input and single execution mode, a gesture input other than the "stop" gesture of the target person is disabled, that is, the vehicle does not execute the gesture input other than the "stop" gesture of the target person. In this mode, the vehicle can accurately complete an action corresponding to each identified gesture instruction, and can switch from an execution state to a stop state at any time based on a stop state trigger condition (for example, a "stop" gesture or an external obstacle), to ensure safety of controlling the vehicle by using an out-of-vehicle gesture. Referring to FIG. 9-a, real-time input and real-time execution (or continuous input and real-time execution) means that when the vehicle is in an execution state, the vehicle always executes an instruction corresponding to a newest body movement made by the target person. After the vehicle identifies a first gesture made by the target person, the vehicle enters an execution state, and executes an action corresponding to the first gesture of the target person. Before completing execution of the first action, the vehicle keeps monitoring the gesture of the target person and an obstacle in the ambient environment. In a process of executing the first action, when the vehicle receives a second gesture (which is not a "stop" gesture, where if the second gesture is a stop gesture, the vehicle switches to a stop state) made by the target person, the vehicle stops executing the action corresponding to the first gesture of the target person, keeps an execution state unchanged, and executes an action corresponding to the second gesture of the target person. In addition, the vehicle keeps monitoring the gesture of the target person and the obstacle in the ambient environment. Before the target person sends a new gesture instruction, the vehicle always executes the action corresponding to the second gesture until execution of the action is completed. By analogy, the vehicle always and continuously updates, based on a newest gesture instruction sent by the target person, an action currently executed by the vehicle. An application scenario of the mode is as follows: In the mode, when the target person moves along a specific path and continuously sends a "come-over" gesture instruction to the vehicle, if a passing condition of an ambient environment of the vehicle (no obstacle), the vehicle can keep following the target person (including traveling straight, turning, and the like) until all instructions of the target person are executed, and the vehicle is parked in the preset range around the target person, and switches from an execution state to a stop state.

It can be learned from the embodiment corresponding to FIG. 4 that, in the vehicle summoning method provided in this application, the vehicle may be summoned by using a body movement, to control the vehicle to travel out of specific space, thereby improving user experience of a driver/passenger of the vehicle.

In the embodiment corresponding to FIG. 4, when the vehicle is in a parking state, the identifier information of the person in the first range around the vehicle is obtained. In some scenarios, although the vehicle is in a parking state, there may be a person inside the vehicle. In this case, if the vehicle controls, in response to the body movement of the target person, the vehicle to travel, the person inside the vehicle may be frightened, and user experience of the vehicle is affected. Therefore, in a possible implementation, when the vehicle is in a parking state, the vehicle may further detect whether there is a person inside the vehicle. If the vehicle is in a parking state and there is no person inside the vehicle, the identifier information of the person in the first range around the vehicle is obtained.

To enable the vehicle to accurately respond to an instruction corresponding to a body movement of an instruction sender (a body movement that can be used to control the vehicle is also referred to as a body instruction in this specification) and perform a corresponding action, a start operation for the body instruction may be further set. After the start operation is correctly performed, the vehicle controls, in response to the body instruction of the instruction sender, the vehicle to move out of specific space. Alternatively, a stop instruction may be further set, so that a priority of the stop instruction is higher than that of another body instruction. After obtaining the stop instruction, the vehicle controls the vehicle to stop, to ensure safety of summoning the vehicle by using the body instruction. Details are described below.

In some possible scenarios, the target person may not expect to summon the vehicle, but an unintentional body movement may be captured by the vehicle, so that the vehicle travels to the first location in response to the body movement of the target person. To prevent the vehicle from controlling traveling of the vehicle based on an unintentional body movement of the target person, the start instruction may be further set in the solutions provided in this application, to prevent the vehicle from incorrectly enabling a vehicle summoning function, and further improve safety in a summoning process. The start instruction may also be a body instruction, and is different from the body instruction described in the embodiment corresponding to FIG. 4. The start instruction may also be a voice instruction. The following is described by using an example with reference to FIG. 10. Referring to FIG. 10, when the vehicle learns that the target person exists in the first range, the vehicle continues to monitor whether the target person sends a start instruction. It is assumed that the vehicle does not obtain the start instruction sent by the target person. In this case, even if the target person sends the body instruction described in the embodiment corresponding to FIG. 4, the vehicle does not respond to the body movement. For example, the vehicle is controlled, based on the body movement and the first distance, to travel to the first location, or the vehicle is controlled, based on the body movement, to travel to the first location. The vehicle responds to the body movement only when obtaining the start instruction sent by the target person. For example, the vehicle is controlled, based on the obtained body movement and the first distance, to travel to the first location, or the vehicle is controlled, based on the body movement, to travel to the first location. For example, referring to FIG. 10-a, after obtaining the start instruction sent by the target person (for example, as shown in FIG. 10-a, the start instruction is that both hands are raised and waved in the air), the vehicle may prompt the target person that the vehicle has obtained the start instruction and enters a state in which the vehicle is to execute an instruction, and the target person may send a body instruction. In a possible implementation, referring to FIG. 10-b, after the target person sends the body movement, the vehicle may further send a prompt message to prompt a surrounding person (including the target person) that the vehicle is to control traveling of the vehicle based on the obtained body movement (the vehicle is to enter an execution state). There may be a plurality of manners of prompting the target person. For example, after obtaining the start instruction sent by the target person, the vehicle may turn on a vehicle light, for example, turn on a hazard light. After obtaining the body movement made by the target person, the vehicle may honk a horn.

In some possible scenarios, referring to FIG. 11, there may be a plurality of target persons in the first range. Referring to the figure, in a possible implementation, a priority may be preset for the target person. When there are a plurality of target persons in the first range and the plurality of target persons have preset priorities, a body movement of a target person with a highest priority may be obtained, and traveling of the vehicle is controlled based on the body movement of the target person with the highest priority.

In some possible scenarios, referring to FIG. 12, the vehicle may learn in advance whether the target person has a driving qualification (whether the target person has a driving license). For example, the user may input, by using a terminal or a cabin head unit, whether each target person has a driving qualification. When the target person appears in the first range, the vehicle may adjust a parking posture based on whether the target person has a driving qualification. Referring to FIG. 12-a, if the target person has a driving qualification, the vehicle may control, based on the body movement, the vehicle to adjust a parking posture when the vehicle stops at the first location, so that a vehicle door at a driver seat faces the target person, and the target person conveniently enters the driver seat. Referring to FIG. 12-b, if the target person does not have a driving qualification, the vehicle may control, based on the body movement, the vehicle to adjust a parking posture when the vehicle stops at the first location, so that a vehicle door of a front passenger faces the target person, and the target person conveniently enters a location of the front passenger. The parking posture is adjusted based on whether the target person has a driving qualification, thereby improving user experience of the vehicle.

In a possible implementation, the vehicle may further detect whether the target person has been on the vehicle. When the vehicle detects that the target person has been on the vehicle, it is considered that a vehicle summoning process ends. If the vehicle does not detect that the target person is on the vehicle, the vehicle may continuously monitor the target person, to obtain a body instruction of the target person. FIG. 13 is a schematic flowchart of another vehicle summoning method according to an embodiment of this application. When a vehicle is in a parking state, the vehicle first learns whether a function of summoning a vehicle by using a gesture is enabled for the vehicle. If the vehicle learns that the function of summoning a vehicle by using a gesture is enabled for the vehicle, the vehicle determines whether a target person exists in a first range around the vehicle. The vehicle may obtain identifier information of a person in the first range around the vehicle. When the identifier information of the person in the first range meets a preset condition, the person who meets the preset condition is determined as a target person. If determining that a target person exists in the first range around the vehicle, the vehicle detects a body movement of the target person, and controls, based on the body movement and a first distance, the vehicle to travel to a first location. When the vehicle detects that the target person has been on the vehicle, it is considered that a current vehicle summoning process ends.

In a possible implementation, to enable the user to better master the method provided in this application, when the vehicle is summoned based on a gesture, a tutorial for summoning a vehicle based on a gesture may be further displayed on the vehicle. For example, a gesture guidance tutorial is projected to a windshield of the vehicle, and the user can learn an out-of-vehicle gesture operation outside the vehicle based on the tutorial projected to the windshield. For another example, when the vehicle learns that a target person exists in the first range, the target person may be guided, by using content projected to a windshield, to perform a next gesture operation. For example, referring to FIG. 14, the target person is guided to send a start instruction; or referring to FIG. 14-a, the target person is guided to make a corresponding body movement.

The foregoing describes the vehicle summoning method provided in the embodiments of this application. In the vehicle summoning method provided in this application, the user may summon the vehicle by using a body movement, to control the vehicle to travel out of specific space, thereby improving user experience of a driver/passenger of the vehicle. It can be understood that, to implement the foregoing functions, the vehicle includes a hardware structure and/or software module to perform each corresponding function. A person of ordinary skill in the art should be easily aware that, in combination with the examples described in embodiments disclosed in this specification, modules, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a hardware structure, to implement the foregoing functions, the intelligent vehicle includes a hardware structure and/or software module to perform each corresponding function. A person of ordinary skill in the art should be easily aware that, in combination with the examples described in embodiments disclosed in this specification, modules, algorithms, and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 15 is a schematic diagram of a structure of a vehicle according to an embodiment of this application. The vehicle includes a sensor 1501, a processor 1502, and a controller 1503. The sensor 1501 may be understood with reference to the sensor system 104 in the intelligent vehicle 100 shown in FIG. 1, and the controller 1503 may be understood with reference to the control system 106 in the intelligent vehicle 100 shown in FIG. 1.

In a possible implementation, the sensor 1501 is configured to obtain, when the vehicle is in a parking state, identifier information of a person in a first range around the vehicle. The processor 1502 is configured to: when the identifier information of the person in the first range meets a preset condition, determine, as a target person, the person who meets the preset condition. The sensor 1501 is further configured to obtain a body movement of the target person. The controller 1503 is configured to: when a first distance is less than a first threshold, control, based on the body movement, the vehicle to travel to a first location, where the first location is obtained based on the vehicle and information about an ambient environment of the vehicle, and the first distance is used to indicate a distance between the target person and the vehicle.

In a possible implementation, the controller 1503 is configured to: obtain a first direction based on the body movement; and control the vehicle to travel in the first direction to the first location.

In a possible implementation, the first location is obtained based on a relative location between the vehicle and a neighboring vehicle of the vehicle.

In a possible implementation, the first location is a location at which the vehicle stops after traveling out of a first parking place.

In a possible implementation, the first location is a location at which the vehicle stops after a partial vehicle body of the vehicle travels out of the first parking place, and the partial vehicle body includes at least one vehicle door of the vehicle.

In a possible implementation, the controller 1503 is further configured to: when the first distance is not less than the first threshold, control, based on the body movement, the vehicle to travel to a second location, where the second location is obtained based on a preset point, and the preset point is a coordinate point in a preset range around the target person.

In a possible implementation, the sensor 1501 is further configured to: when the vehicle is in a parking state, detect whether there is a person inside the vehicle. The sensor 1501 is configured to: when the vehicle is in a parking state and there is no person inside the vehicle, obtain the identifier information of the person in the first range around the vehicle.

In a possible implementation, the first distance is obtained based on a distance between a terminal and the vehicle, and the terminal is a terminal that establishes a binding relationship with the vehicle in advance.

In a possible implementation, the sensor 1501 is further configured to: when the vehicle is in a parking state, learn whether the terminal exists in the first range of the vehicle. The sensor 1501 is configured to: when the vehicle is in a parking state and the terminal exists in the first range of the vehicle, obtain the identifier information of the person in the first range around the vehicle.

In a possible implementation, the sensor 1501 is further configured to obtain a start instruction when the vehicle is in a parking state. The sensor 1501 is configured to: when learning that the start instruction matches a start instruction prestored in the vehicle, obtain the body movement of the target person.

In a possible implementation, the body movement includes one or more of a come-over movement, continuously knocking a hood of the vehicle, touching the hood of the vehicle and drawing a pattern, and a traffic police gesture.

FIG. 16 is a schematic diagram of a structure of another vehicle according to an embodiment of this application. The vehicle includes a processor 1601 and a memory 1602, and optionally, may further include a communication interface 1603. The processor 1601 may be understood with reference to the processor 113 in the intelligent vehicle 100 shown in FIG. 1. The processor includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The memory 1602 may be understood with reference to the memory 114 in the intelligent vehicle 100 shown in FIG. 1. The memory may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, no limitation is imposed. The communication interface 1603 may be understood with reference to the wireless communication system 146 in the intelligent vehicle 100 shown in FIG. 1. The communication interface 1603 may be any apparatus such as a transceiver, and is configured to communicate with another device or a communication network, for example, communicate with the cloud device shown in FIG. 6. The communication interface 1603 may communicate with another device by using a technology such as the Ethernet, a radio access network (radio access network, RAN), or a wireless local area network (wireless local area network, WLAN).

In a possible implementation, the vehicle includes a processor 1601. The processor 1601 is coupled to a memory 1602, the memory stores program instructions, and when the program instructions stored in the memory are executed by the processor, the method described in FIG. 4 to FIG. 14-a is implemented. In a possible implementation, the vehicle may further include a communication interface 1603. The communication interface is configured to establish communication with a cloud device or a bound terminal device. For understanding, refer to the method described in FIG. 4 to FIG. 14-a. Details are not described herein again.

In this embodiment of this application, the sensor can be considered as a sensing module 1701 of the vehicle, the processor having a processing function can be considered as a processing module 1702 of the vehicle, the controller can be considered as a control module 1703 of the vehicle, and the memory can be considered as a storage module (not shown in the figure) of the vehicle. FIG. 17 is a schematic diagram of a structure of another vehicle according to an embodiment of this application.

It should be understood that the foregoing descriptions are merely examples provided in the embodiments of this application. In addition, the terminal device may have more or fewer components than shown components, may combine two or more components, or may have different component configurations.

All or some of the foregoing embodiments may be implemented by using software, hardware, firmware, or any combination thereof. When software is used to implement the embodiments, all or a part of the embodiments may be implemented in a form of a computer program product.

An embodiment of this application further provides a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method described in FIG. 4 to FIG. 14-a. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM). , the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general purpose processor may be a microprocessor or any regular processor or the like.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

An embodiment of this application further provides a computer-readable storage medium. The computer-readable storage medium stores a program used to train a model. When the program runs on a computer, the computer is enabled to perform the method described in FIG. 4 to FIG. 14-a.

An embodiment of this application further provides a digital processing chip. A circuit and one or more interfaces that are configured to implement the processor or a function of the processor are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the vehicle in the foregoing embodiments.

An embodiment of this application further provides a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

Further embodiments of the present invention are provided in the following. It should be noted that the numbering used in the following section does not necessarily need to comply with the numbering used in the previous sections.
Embodiment 1. A vehicle summoning method, comprising:
   obtaining, when a vehicle is in a parking state, identifier information of a person in a first range around the vehicle;
   when the identifier information of the person in the first range meets a preset condition, determining, as a target person, the person who meets the preset condition;
   obtaining a body movement of the target person; and
   when a first distance is less than a first threshold, controlling, based on the body movement, the vehicle to travel to a first location, wherein the first location is obtained based on the vehicle and information about an ambient environment of the vehicle, and the first distance is used to indicate a distance between the target person and the vehicle.
Embodiment 2. The method according to embodiment 1, wherein the controlling, based on the body movement, the vehicle to travel to a first location comprises:
   obtaining a first direction based on the body movement; and
   controlling the vehicle to travel in the first direction to the first location.
Embodiment 3. The method according to embodiment 1 or 2, wherein the first location is obtained based on a relative location between the vehicle and a neighboring vehicle of the vehicle.
Embodiment 4. The method according to embodiment 1 or 2, wherein the first location is obtained based on a location of the vehicle relative to a first parking place, and the first parking place is a parking place in which the vehicle is currently located.
Embodiment 5. The method according to embodiment 4, wherein the first location is a location at which the vehicle stops after traveling out of the first parking place.
Embodiment 6. The method according to embodiment 5, wherein the first location is a location at which the vehicle stops after a partial vehicle body of the vehicle travels out of the first parking place, and the partial vehicle body comprises at least one vehicle door of the vehicle.
Embodiment 7. The method according to embodiment 1, wherein the method further comprises:
   when the first distance is not less than the first threshold, controlling, based on the body movement, the vehicle to travel to a second location, wherein the second location is obtained based on a preset point, and the preset point is a coordinate point in a preset range around the target person.
Embodiment 8. The method according to any one of embodiments 1 to 7, wherein the method further comprises: when the vehicle is in a parking state, detecting whether there is a person inside the vehicle; and
   the obtaining, when a vehicle is in a parking state, identifier information of a person in a first range around the vehicle comprises:
   when the vehicle is in a parking state and there is no person inside the vehicle, obtaining the identifier information of the person in the first range around the vehicle.
Embodiment 9. The method according to any one of embodiments 1 to 8, wherein the first distance is obtained based on a distance between a terminal and the vehicle, and the terminal is a terminal that establishes a binding relationship with the vehicle in advance.
Embodiment 10. The method according to embodiment 9, wherein the method further comprises:
   when the vehicle is in a parking state, learning whether the terminal exists in the first range of the vehicle; and
   the obtaining, when a vehicle is in a parking state, identifier information of a person in a first range around the vehicle comprises:
      when the vehicle is in a parking state and the terminal exists in the first range of the vehicle, obtaining the identifier information of the person in the first range around the vehicle.
Embodiment 11. The method according to any one of embodiments 1 to 10, wherein the method further comprises: obtaining a start instruction when the vehicle is in a parking state; and
   the obtaining a body movement of the target person comprises:
   when learning that the start instruction matches a start instruction prestored in the vehicle, obtaining the body movement of the target person.
Embodiment 12. The method according to any one of embodiments 1 to 11, wherein the body movement comprises one or more of a come-over movement, continuously knocking a hood of the vehicle, touching the hood of the vehicle and drawing a pattern, and a traffic police gesture.
Embodiment 13. A vehicle, comprising:
   a sensor, configured to obtain, when the vehicle is in a parking state, identifier information of a person in a first range around the vehicle;
   a processor, configured to: when the identifier information of the person in the first range meets a preset condition, determine, as a target person, the person who meets the preset condition, wherein
   the sensor is further configured to obtain a body movement of the target person; and
   a controller, configured to: when a first distance is less than a first threshold, control, based on the body movement, the vehicle to travel to a first location, wherein the first location is obtained based on the vehicle and information about an ambient environment of the vehicle, and the first distance is used to indicate a distance between the target person and the vehicle.
Embodiment 14. The vehicle according to embodiment 13, wherein the controller is configured to:
   obtain a first direction based on the body movement; and
   control the vehicle to travel in the first direction to the first location.
Embodiment 15. The vehicle according to embodiment 13 or 14, wherein the first location is obtained based on a relative location between the vehicle and a neighboring vehicle of the vehicle.
Embodiment 16. The vehicle according to embodiment 13 or 14, wherein the first location is a location at which the vehicle stops after traveling out of a first parking place.
Embodiment 17. The vehicle according to embodiment 16, wherein the first location is a location at which the vehicle stops after a partial vehicle body of the vehicle travels out of the first parking place, and the partial vehicle body comprises at least one vehicle door of the vehicle.
Embodiment 18. The vehicle according to embodiment 13, wherein the controller is further configured to:
   when the first distance is not less than the first threshold, control, based on the body movement, the vehicle to travel to a second location, wherein the second location is obtained based on a preset point, and the preset point is a coordinate point in a preset range around the target person.
Embodiment 19. The vehicle according to any one of embodiments 13 to 18, wherein
   the sensor is further configured to:
   when the vehicle is in a parking state, detect whether there is a person inside the vehicle; and
   the sensor is configured to:
      when the vehicle is in a parking state and there is no person inside the vehicle, obtain the identifier information of the person in the first range around the vehicle.
Embodiment 20. The vehicle according to any one of embodiments 13 to 18, wherein the first distance is obtained based on a distance between a terminal and the vehicle, and the terminal is a terminal that establishes a binding relationship with the vehicle in advance.
Embodiment 21. The vehicle according to embodiment 20, wherein
   the sensor is further configured to:
   when the vehicle is in a parking state, learn whether the terminal exists in the first range of the vehicle; and
   the sensor is configured to:
      when the vehicle is in a parking state and the terminal exists in the first range of the vehicle, obtain the identifier information of the person in the first range around the vehicle.
Embodiment 22. The vehicle according to any one of embodiments 13 to 21, wherein the sensor is further configured to:
   obtain a start instruction when the vehicle is in a parking state; and
   the sensor is configured to: when learning that the start instruction matches a start instruction prestored in the vehicle, obtain the body movement of the target person.
Embodiment 23. The vehicle according to any one of embodiments 13 to 22, wherein the body movement comprises one or more of a come-over movement, continuously knocking a hood of the vehicle, touching the hood of the vehicle and drawing a pattern, and a traffic police gesture.
Embodiment 24. An intelligent vehicle, wherein the intelligent vehicle comprises a processor, the processor is coupled to a memory, the memory stores program instructions, and when the program instructions stored in the memory are executed by the processor, the method according to any one of embodiments 1 to 12 is implemented. Embodiment 25. An intelligent vehicle, wherein the intelligent vehicle comprises a processing circuit and a storage circuit, and the processing circuit and the storage circuit are configured to perform the method according to any one of embodiments 1 to 12.
Embodiment 26. A computer-readable storage medium, comprising a program, wherein when the program runs on a computer, the computer is enabled to perform the method according to any one of embodiments 1 to 12.
Embodiment 27. A computer program product, wherein when the computer program product runs on a computer, the computer is enabled to perform the method according to any one of embodiments 1 to 12.
Embodiment 28. A chip, wherein the chip is coupled to a memory, configured to execute a program stored in the memory, to perform the method according to any one of embodiments 1 to 12.

A person of ordinary skill in the art may understand that all or a part of the steps of the methods in embodiments may be implemented by a program instructing relevant hardware. The program may be stored in a computer-readable storage medium. The storage medium may include: a ROM, a RAM, a magnetic disk, or an optical disc.

In the specification, claims, and the accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. Moreover, the terms "including", "having", and any other variants thereof are intended to cover a non-exclusive inclusion, for example, a process, method, system, product, or device that includes a series of steps or modules is not necessarily limited to those steps or modules that are clearly listed, but may include other steps or modules that are not clearly listed or that are inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may not be grouped into multiple circuit modules. Objectives of the solutions of this application may be achieved by selecting some or all of the modules according to actual requirements.

## Claims

1. A vehicle summoning method, comprising:
obtaining a body movement of a target person;
obtaining information about an ambient environment of the vehicle;
controlling, based on the body movement and the information, the vehicle to travel.

2. the method according to claim 1, wherein the controlling, based on the body movement and the information, the vehicle to travel, comprises:
obtaining a first direction based on the body movement;
controlling the vehicle to travel in the first direction.

3. the method according to claim 1 or 2, wherein the controlling, based on the body movement and the information, the vehicle to travel, comprises:
obtaining a first location based on the information about an ambient environment of the vehicle;
controlling the vehicle to travel to the first location.

4. the method according to any one of claims 1 to 3, comprising:
obtaining a start instruction;
when the start instruction matches a start instruction prestored in the vehicle, obtaining the body movement of the target person.

5. the method according to any one of claims 1 to 4, comprising:
when there is no person inside the vehicle, controlling, based on the body movement and the information, the vehicle to travel.

6. the method according to any one of claims 1 to 5, wherein
the obtaining a body movement of a target person, comprises: obtaining a gesture signal of a traffic police;
in response to the gesture signal of the traffic police, controlling, based on the gesture signal and the information about an ambient environment of the vehicle, the vehicle to travel according to the gesture signal of the traffic police.

7. the method according to any one of claims 1 to 5, comprising:
receiving a gesture from the target person, wherein the target person moves along a path;
controlling the vehicle, based on the gesture and the information about the ambient environment, to follow the target person.

8. A vehicle summoning apparatus, comprising:
a sensing module, configured to obtain a body movement of a target person;
the sensing module is further configured to obtain information about an ambient environment of the vehicle;
a control module, configured to control, based on the body movement and the information, the vehicle to travel.

9. the apparatus according to claim 8, wherein the control module is further configured to:
obtain a first direction based on the body movement;
control the vehicle to travel in the first direction.

10. the apparatus according to claim 8 or 9, wherein the control module is further configured to:
obtain a first location based on the information about an ambient environment of the vehicle;
control the vehicle to travel to the first location.

11. the apparatus according to any one of claims 8 to 10, wherein the sensing module is further configured to:
obtain a start instruction; and
when the start instruction matches a start instruction prestored in the vehicle, obtain the body movement of the target person.

12. the apparatus according to any one of claims 8 to **11,** wherein the control module is further configured to:
when there is no person inside the vehicle, controlling, based on the body movement and the information, the vehicle to travel.

13. the apparatus according to any one of claims 8 to 12, wherein the sensing module is further configured to:
obtain a gesture signal of a traffic police;
wherein the control module is further configured to:
in response to the gesture signal of the traffic police, control, based on the gesture signal and the information about an ambient environment of the vehicle, the vehicle to travel according to the gesture signal of the traffic police.

14. the apparatus according to any one of claims 8 to 13, wherein the sensing module is further configured to: receive a gesture from the target person, wherein the target person moves along a path;
wherein the control module is further configured to:
control the vehicle, based on the gesture and the information about the ambient environment, to follow the target person.

15. A computer-readable storage medium, comprising instructions, wherein when the instructions are executed on a computer, the computer is enabled to perform the method according to any one of claims 1 to 7.
